(19) European Patent Office — Europäisches Patentamt / European Patent Office / Office européen des brevets

(11) EP 3 567 447 B1

(12) EUROPEAN PATENT SPECIFICATION

(45) Date of publication and mention
of the grant of the patent:
**11.01.2023 Bulletin 2023/02**

(21) Application number: **18742359.5**

(22) Date of filing: **18.01.2018**

(51) International Patent Classification (IPC):
**G05D 1/02** (2020.01)      **G01C 21/34** (2006.01)
**G01C 21/20** (2006.01)

(52) Cooperative Patent Classification (CPC):
**G05D 1/0217; G01C 21/20; G01C 21/3461;
G05D 1/02; G05D 1/0274; G05D 1/0278**

(86) International application number:
**PCT/CN2018/073113**

(87) International publication number:
**WO 2018/133804 (26.07.2018 Gazette 2018/30)**

(54) **PATH PLANNING METHOD AND DEVICE**

WEGPLANUNGSVERFAHREN UND -VORRICHTUNG

PROCÉDÉ ET DISPOSITIF DE PLANIFICATION DE TRAJECTOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.01.2017 CN 201710035221**

(43) Date of publication of application:
**13.11.2019 Bulletin 2019/46**

(73) Proprietor: **Huawei Technologies Co., Ltd.
Longgang District
Shenzhen, Guangdong 518129 (CN)**

(72) Inventors:
• **BAO, Dinghua
  Shenzhen, Guangdong 518129 (CN)**
• **ZHANG, Zhijun
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
**CN-A- 105 223 950      CN-A- 105 869 512
CN-A- 106 199 498      CN-U- 204 904 349
US-A1- 2006 149 465    US-A1- 2012 059 578
US-A1- 2014 195 049    US-A1- 2014 195 049
US-A1- 2015 197 010    US-A1- 2015 312 774**

• **DA FONSECA VINICIUS PRADO ET AL: "Indoors
object location protocol in a smart home", IECON
2013 - 39TH ANNUAL CONFERENCE OF THE IEEE
INDUSTRIAL ELECTRONICS SOCIETY, IEEE, 10
November 2013 (2013-11-10), pages 5492-5497,
XP032539234, ISSN: 1553-572X, DOI:
10.1109/IECON.2013.6700031 [retrieved on
2013-12-30]**

## Description

## TECHNICAL FIELD

Embodiments of the present invention relate to the field of intelligent control, and more specifically, to a path planning method and apparatus.

## BACKGROUND

Path planning is an important branch in the field of intelligent control researches. Using a good path planning technology can reduce an operating time of an intelligent execution apparatus (for example, a robot), improve task execution efficiency, and improve task execution quality.

A map may be used to implement path planning. In the prior art, a map includes location information and obstacle information, so that an intelligent execution apparatus can find, based on the map, a path that can bypass an obstacle.

However, only the location information and the obstacle information are considered in existing path planning, and other factors are not considered. Consequently, application of path planning is limited.

US 2015/0197010 A1 describes methods, systems, and devices for evaluating signal quality metrics at one or more locations on one or more available paths to a target location by a robotic device, and determining a path to a target location and an access point switching plan for the robotic device based, at least in part, on evaluated metrics. In some examples, evaluating signal quality metrics may include comparing signal quality metrics associated with one or more locations to multiple signal quality thresholds, where one or more of these signal quality thresholds may include a minimum bandwidth threshold. In some examples, the access point switching plan comprises one or more switching events between multiple radio access technologies (RATs) at one or more boundaries. In some examples, determining a path or determining an access point switching plan is based, at least in part, on comparing the costs associated with usage of multiple RATs.

US 2012 / 0059578 A1 describes a routing system configured to determine a route between a source and a destination based on availability and reliability of location reference devices. Visibility information that is indicative of availability of at least a threshold number of location reference devices along the route can be determined. For each of a plurality of routes between the source and the destination, a reliability rating associated with the route can be determined based on the visibility information associated with the route. The reliability rating is indicative of a reliability of the route and an ability of the routing system to maintain continuous connectivity to the at least the threshold number of location reference devices along the route. The reliability ratings of the plurality of routes are compared to identify and to present one of the plurality of routes with a highest reliability rating.

## SUMMARY

Embodiments of the present invention provide a path planning method and device, to implement better path planning.

According to a first aspect, a path planning method is provided. The method includes: obtaining, based on a pass-through distance of each of a plurality of first areas and signal quality of a wireless signal in each first area, a pass-through cost for passing through each first area; obtaining a start location and a target location; and performing path planning based on the pass-through cost for passing through each first area, to determine a pass-through path from the start location to the target location, where the pass-through path includes an area passed through from the start location to the target location.

Therefore, the pass-through cost for passing through each first area is obtained based on the pass-through distance of each of the plurality of first areas and the signal quality of the wireless signal in each first area, and path planning is performed based on the pass-through cost. In this way, when path planning is performed, not only a pass-through distance of an area but also signal quality of a wireless signal in the area can be considered, to implement better path planning. Further, the pass-through distance and the signal quality are quantized into a pass-through cost, so that when an intelligent execution apparatus performs path planning, a pass-through path is obtained based on the pass-through cost, to reduce an operating time of the intelligent execution apparatus, and improve task execution efficiency.

Optionally, the pass-through path may be a path with a minimum pass-through cost.

Optionally, the method further includes: generating a signal quality map based on the pass-through cost for passing through each first area, where the signal quality map includes the pass-through cost for passing through each first area, and is used to mark the signal quality of each first area within a coverage area of the plurality of first areas; and the performing path planning based on the pass-through cost for passing through each first area, to determine a pass-through path from the start location to the target location includes: based on the signal quality map, determining the pass-through path based on the pass-through cost for passing through each area within the coverage area of the plurality of areas.

Therefore, the pass-through cost in each first area is obtained based on the pass-through distance of each of the plurality of first areas and the signal quality of the wireless signal in each first area, and the signal quality map on which a pass-through cost of each area is marked is generated, so that a better map can be obtained.

Optionally, the signal quality map may be a pass-through cost list or a global pass-through cost topology view.

Optionally, the obtaining, based on a pass-through distance of each of a plurality of first areas and signal quality of a wireless signal in each first area, a pass-through cost for passing through each first area includes: determining, based on the pass-through distance of each first area, a first pass-through cost component corresponding to the pass-through distance of each first area; determining, based on the signal quality of the wireless signal in each first area, a second pass-through cost component corresponding to the signal quality of the wireless signal in each first area; and calculating, based on the first pass-through cost component and the second pass-through cost component of each first area, the pass-through cost for passing through each first area.

Therefore, for each task type, a pass-through cost of the task type in each area is calculated. In this way, when path planning of a task type is performed, a pass-through cost of each area for the task type can be directly obtained, to implement more optimized path planning.

Optionally, the method further includes: obtaining at least one task type to be executed when the pass-through path is passed through; the obtaining, based on the signal quality of the wireless signal in each first area, a second pass-through cost component corresponding to the pass-through distance of each first area includes: obtaining, based on signal quality of at least one type of available wireless signal of each of the at least one task type in each first area, a second pass-through cost component corresponding to each task type at each first area; the calculating, based on the first pass-through cost component and the second pass-through cost component of each first area, the pass-through cost for passing through each first area includes: calculating, based on the first pass-through cost component of each first area and the second pass-through cost component corresponding to each task type in each first area, a pass-through cost for passing through each first area when each task type is executed; and the performing path planning based on the pass-through cost for passing through each first area includes: determining, based on the pass-through cost for passing through each first area when each task type is executed, the pass-through path used for executing each task type.

Optionally, the at least one task type includes a first task type, and the obtaining the second pass-through cost component corresponding to each task type in each first area includes: determining, based on signal quality of at least one type of wireless signal whose signal quality meets a predetermined condition and that is in an available wireless signal of the first task type in each first area, a second pass-through cost component corresponding to the first task type in each first area.

Optionally, the determining a second pass-through cost component corresponding to the first task type in each first area includes: determining, based on signal quality of at least one type of wireless signal whose signal quality is best and that is in the available wireless signal of the first task type in each first area, the second pass-through cost component corresponding to the first task type in each first area, where the first area is an area that meets the following condition: the at least one type of wireless signal whose signal quality is best and that is in the available wireless signal of the first task type in the first area meets a wireless signal requirement of the first task type.

Optionally, the method further includes: determining at least one second area, where the signal quality of the at least one type of wireless signal whose signal quality is best and that is in the available wireless signal of the first task type in the second area does not meet the wireless signal requirement of the first task type; and when path planning is performed, considering each of the at least one second area as an obstacle.

Optionally, the method further includes: obtaining a plurality of task types to be executed when the pass-through path is passed through; the obtaining, based on the signal quality of the wireless signal in each first area, a second pass-through cost component corresponding to the signal quality of the wireless signal in each first area includes: obtaining, based on signal quality of at least one type of available wireless signal of each of the plurality of task types, a second pass-through cost component corresponding to a whole of the plurality of task types in each first area; the calculating, based on the first pass-through cost component and the second pass-through cost component of each first area, the pass-through cost for passing through each first area includes: calculating, based on the first pass-through cost component of each first area and the second pass-through cost component corresponding to the whole of the plurality of task types in each first area, a pass-through cost corresponding to the whole of the plurality of task types in each first area; and the performing path planning based on the pass-through cost for passing through each first area includes: determining, based on the pass-through cost corresponding to the whole of the plurality of task types in each first area, the pass-through path used for executing the plurality of task types.

Therefore, the plurality of task types may be considered as a whole, and the pass-through cost of the whole of the plurality of task types in each area is obtained. In this way, when path planning required for executing the plurality of task types is performed, a pass-through cost of the whole of the plurality of task types in each area can be directly obtained, to reduce a processing time of the intelligent execution apparatus, and improve processing efficiency.

Optionally, the obtaining a second pass-through cost component corresponding to a whole of the plurality of task types in each first area includes: obtaining, based on signal quality of at least one type of available wireless signal of each of the plurality of task types in each first area, a second pass-through cost component corresponding to each task type in each first area; and performing weighted processing on a plurality of second pass-through cost components corresponding to the plurality of task types in each first area, to obtain the second pass-through cost component corresponding to the whole of the plurality of task types in the first area.

Optionally, the first area is an area that meets the following condition: the signal quality of the available wireless signal of each of the plurality of task types in each first area meets a wireless signal requirement of each task type.

Optionally, the method further includes: determining at least one third area, where signal quality of a wireless signal corresponding to at least one of the plurality of task types in the third area does not meet a signal quality requirement of the at least one task type; and when path planning is performed, considering each of the at least one third area as an obstacle.

Optionally, the determining, based on the signal quality of the wireless signal in each first area, a second pass-through cost component corresponding to the signal quality of the wireless signal in each first area includes: determining, based on signal quality of a wireless signal in each area and a correspondence between a signal quality interval of a wireless signal and a pass-through cost component, the obtained second pass-through cost component in each first area.

Optionally, the obtaining, based on a pass-through distance of each of a plurality of first areas and signal quality of a wireless signal in each first area, a pass-through cost for passing through each first area includes: obtaining, in a statistical manner based on the pass-through distance of each first area and signal quality that is of wireless signals in each first area and that is obtained at a plurality of times, the pass-through cost for passing through each first area; or obtaining, in real time based on the pass-through distance of each first area and real-time signal quality of a wireless signal in each first area, the pass-through cost for passing through each first area; or obtaining, based on the pass-through distance of each first area and predicted signal quality of a wireless signal in each first area, the pass-through cost for passing through each first area.

Optionally, the obtaining, in a statistical manner based on the pass-through distance of each first area and signal quality that is of wireless signals in each first area and that is obtained at a plurality of times, the pass-through cost for passing through each first area includes: when a change rate of a direction of a wireless signal and/or a change rate of strength of the wireless signal in each first area are/is less than or equal to a first threshold, obtaining, in a statistical manner based on the pass-through distance of each first area and the signal quality that is of the wireless signals in each first area and that is obtained at a plurality of times, the pass-through cost for passing through each first area.

Optionally, the obtaining, in real time based on the pass-through distance of each first area and real-time signal quality of a wireless signal in each first area, the pass-through cost for passing through each first area includes: when a change rate of a direction of a wireless signal and/or a change rate of strength of the wireless signal in each first area are/is greater than a second threshold, obtaining, in real time based on the pass-through distance of each first area and the real-time signal quality of the wireless signal in each first area, the pass-through cost for passing through each first area.

Optionally, the wireless signal is a satellite signal, the signal quality of the wireless signal includes positioning precision of the wireless signal, and before the obtaining, based on the pass-through distance of each first area and predicted signal quality of a wireless signal in each first area, the pass-through cost for passing through each first area, the method further includes: determining, based on a satellite signal that is transmitted at a first moment and that is received in another area other than each first area, satellite arrangement in the another area at the first moment; determining, based on the satellite arrangement in the another area at the first moment, a location relationship between each first area and the another area, and an operating pattern of a satellite, satellite arrangement in each first area at a second moment; and predicting, based on the satellite arrangement in each first area at the second moment, positioning precision of a satellite signal in each first area at the second moment.

A signal quality value of the wireless signal includes a change rate of a direction of the wireless signal and a positioning precision of the wireless signal. Furthermore, the signal quality of the wireless signal may include a strength of the wireless signal and/or a change rate of the strength of the wireless signal. Optionally, the wireless signal includes at least one of a wireless electromagnetic signal, a geomagnetic signal, an infrared signal, and a sound wave signal.

According to a second aspect, a path planning apparatus is provided. The path planning apparatus may include a unit configured to perform the method in the first aspect or any one of the optional implementations of the first aspect.

According to a third aspect, a path planning apparatus is provided. The path planning apparatus may include a memory and a processor. The memory may store program code, the processor communicates with the memory by using an internal connection path, and the processor may invoke the program code stored in the memory, to perform the method in the first aspect or any one of the optional implementations of the first aspect.

According to a fourth aspect, a storage medium is provided. The storage medium may store program code, and a processor may invoke the program code stored in the storage medium (memory), to perform the method in the first aspect or any one of the optional implementations of the first aspect.

## BRIEF DESCRIPTION OF DRAWINGS

FIG 1 is a schematic diagram of a path planning system according to an embodiment of the present invention;

FIG 2 is a schematic flowchart of a path planning method according to an embodiment of the present invention;

FIG 3 is a schematic diagram of performing path planning based on a pass-through cost according to an embodiment of the present invention;

FIG 4 is a schematic diagram of performing path planning based on a pass-through cost according to an embodiment of the present invention;

FIG 5 is a schematic diagram of performing path planning based on a pass-through cost according to an embodiment of the present invention;

FIG 6 is a schematic diagram of performing path planning based on a pass-through cost according to an embodiment of the present invention;

FIG. 7 is a schematic diagram of performing path planning based on a pass-through cost according to an embodiment of the present invention;

FIG. 8 is a schematic flowchart of a map generation method according to an embodiment of the present invention;

FIG. 9 is a schematic flowchart of a path planning method according to an embodiment of the present invention;

FIG. 10 is a schematic block diagram of a path planning apparatus according to an embodiment of the present invention;

FIG. 11 is a schematic block diagram of a map generation device according to an embodiment of the present invention;

FIG. 12 is a schematic block diagram of a path planning apparatus according to an embodiment of the present invention; and

FIG. 13 is a schematic block diagram of a processing device according to an embodiment of the present invention.

## DESCRIPTION OF EMBODIMENTS

The following describes the technical solutions in the embodiments of the present invention with reference to the accompanying drawings in the embodiments of the present invention.

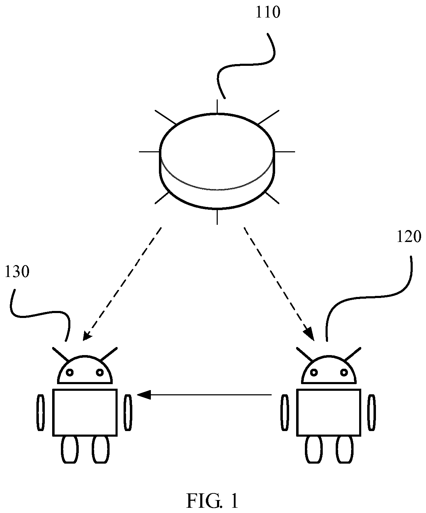

FIG. 1 is a schematic diagram of a path planning system according to an embodiment of the present invention. As shown in FIG. 1, the system may include a wireless signal generation body 110 and an intelligent execution apparatus 120.

The wireless signal generation body 110 may be a man-made device or a naturally occurring object or life.

For example, the man-made device may be a network device, a satellite, a terminal device, or the like. In this case, a wireless signal may be a wireless communications signal, a wireless network signal, a wireless positioning signal, or the like.

For example, the naturally occurring object may be the earth or a natural object in the earth, for example, flowing water. The life may be an animal or a human being. In this case, a wireless signal may be a geomagnetic signal, an infrared signal, a sound wave signal, or the like.

The intelligent execution apparatus 120 may perform path planning based on signal quality of a wireless signal generated by the wireless signal generation body 110.

Specifically, the intelligent execution apparatus 120 may generate a signal quality map based on the signal quality of the wireless signal, and perform path planning based on the signal quality map.

Optionally, the system may further include an intelligent execution apparatus 130.

The intelligent execution apparatus 120 may further send the generated signal quality map to the intelligent execution apparatus 130. The intelligent execution apparatus 130 may perform path planning based on the signal quality map sent by the intelligent execution apparatus 120.

It should be understood that the intelligent execution apparatus described in this embodiment of the present invention may be a machining apparatus that automatically works, for example, may be a robot, a self-driving vehicle, or an unmanned aerial vehicle. Although the intelligent execution apparatuses 120 and 130 shown in FIG. 1 are robots, they are merely examples described for ease of understanding, and are not intended to limit the scope of the present invention. Similarly, an illustration manner of the wireless signal generation body 110 shall not constitute any limitation on the scope of the embodiments of the present invention.

When path planning is performed, a candidate area may be divided into a plurality of areas, and a pass-through cost for passing through an area is marked in all or some areas. If a pass-through cost is high, a cost for passing through the area is high, and a probability that the area is is small when path planning is performed.

Optionally, a pass-through cost may be a value, and unitless values corresponding to all areas may be obtained for all the areas based on a same criterion.

The following describes in detail how to obtain pass-through costs for passing through a plurality of areas and generate a signal quality map based on the pass-through costs of the plurality of areas, and describes how to perform path planning based on the pass-through costs of the plurality of areas.

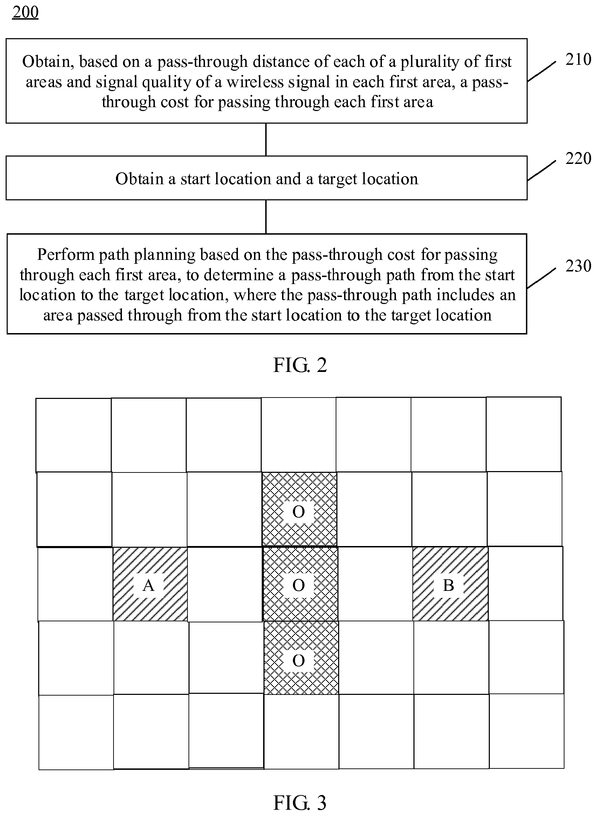

FIG. 2 is a schematic flowchart of a path planning method 200 according to an embodiment of the present invention. The method 200 may be applied to the system shown in FIG. 1. The method may be optionally executed by the intelligent execution apparatus 120 shown in FIG. 1. It should be understood that the method 200 may be executed by another device. An intelligent execution apparatus is used merely as an example for description in this embodiment of the present invention.

As shown in FIG. 2, the method 200 includes the following content.

210. Obtain, based on a pass-through distance of each of a plurality of first areas and signal quality of a wireless signal in each first area, a pass-through cost for passing through each first area.

Optionally, the intelligent execution apparatus may directly detect signal quality of a wireless signal in each area, or may receive signal quality that is of a wireless signal and that is sent by another device, or may receive manually-input signal quality of a wireless signal.

Optionally, when directly detecting the signal quality of the wireless signal in each area, the intelligent execution apparatus may traverse all areas, to obtain the signal quality of the wireless signal for calculating a pass-through cost.

Optionally, the area described in this embodiment of the present invention may be referred to as a node, and the area may be a square structure, or may be a rectangle, a hexagon, or any other shape.

Optionally, pass-through distances of all areas in a map may be the same, or may be different.

Optionally, the pass-through distance of the first area is a length between any two points in the first area. For example, area division in a grid manner is used as an example, and a length between any two points may be a side-length distance or a diagonal distance.

Optionally, the wireless signal described in this embodiment of the present invention may include at least one of a wireless electromagnetic signal, a geomagnetic signal, an infrared signal, and a sound wave signal.

The signal quality of the wireless signal includes a change rate of the wireless signal and a positioning precision of the wireless signal. Further, the signal quality of the wireless signal may include a strength of the wireless signal and/or a change rate of the strength of the wireless signal.

It should be understood that the signal quality of the wireless signal may be further measured in another manner other than the strength of the wireless signal, the change rate of the direction of the wireless signal and/or the change rate of the strength of the wireless signal, and the positioning precision of the wireless signal, and may be specifically determined based on a to-be-executed task. This is not specifically limited in this embodiment of the present invention.

The wireless electromagnetic signal includes but is not limited to a wireless network signal, a wireless communications signal, and a wireless positioning signal.

It should be understood that wireless electromagnetic signals that can implement communication between a terminal device and a network device may all be referred to as wireless communications signals, and the wireless communications signals include but are not limited to a 5th generation (5G) communications technology signal, a 4th generation (4G) communications technology signal, a 3rd generation (3G) communications technology signal, a 2nd generation (2G) communications technology signal, a Code Division Multiple Access (CDMA) signal, a Frequency Division Multiple Access (FDMA) signal, a Time Division Multiple Access (TDMA) signal, a global system for mobile communications (GSM) signal, a wireless local area network (WLAN) signal, a Worldwide Interoperability for Microwave Access (WiMAX) signal, and a Wireless Fidelity (WIFI) signal.

It should be further understood that wireless electromagnetic signals that can implement wireless communication may all be referred to as wireless communications signals, and the wireless communications signals include but are not limited to a Bluetooth signal, a ZigBee signal, 2.4G data transmission, an infrared signal, a radio communication signal, and the like.

It should be further understood that wireless electromagnetic signals that can implement wireless positioning may all be referred to as wireless positioning signals, and the wireless positioning signals may include but are not limited to a Global Positioning System (GPS) signal, a WiFi signal, a base station positioning signal, a Bluetooth signal, a radio frequency identification RFID) signal, an ultra-wideband (UWB) signal, and the like.

Optionally, the geomagnetic signal may be used for positioning, and signal quality of the geomagnetic signal may include stability and strength of the geomagnetic signal. The stability is stability of a geomagnetic direction, or may be stability of geomagnetic strength.

Optionally, the infrared signal may be used for positioning, detection, and the like.

Optionally, the sound wave signal may include an ultrasonic wave signal, and may be used for implementing positioning, detection, and the like.

It should be understood that the first area described in this embodiment of the present invention may be any area in the candidate area, or may be an area that meets a specific condition, for example, an area with relatively good signal quality, and a pass-through cost may be calculated for the area. However, an area that does not meet a condition, for example, an area with relatively poor signal quality, may be directly considered as an obstacle.

It should be understood that in this embodiment of the present invention, the pass-through cost for passing through the first area sometimes may be referred to as a pass-through cost of the first area or a pass-through cost in the first area.

Optionally, in this embodiment of the present invention, the intelligent execution apparatus may generate a signal quality map based on the pass-through cost for passing through each first area, where the signal quality map includes the pass-through cost for passing through each first area, and is used to mark the signal quality of each first area within a coverage area of the plurality of first areas, and the signal quality map may be used for performing path planning.

Optionally, the signal quality map may be a pass-through cost list or a global pass-through cost topology view.

It should be understood that in this embodiment of the present invention, the signal quality map may mark signal quality of a wireless signal, but it does not mean that a pass-through cost of each area in the map is related only to the signal quality of the wireless signal. The pass-through cost of each area is further related to a pass-through distance of each area. For example, if pass-through distances are inconsistent, signal quality of wireless signals may be different even if pass-through costs are the same.

It should be understood that in this embodiment of the present invention, the intelligent execution apparatus may further not generate a map, but directly performs path planning based on pass-through costs of a plurality of first areas.

Optionally, the intelligent execution apparatus may obtain a pass-through cost in a corresponding area in a statistical or voting manner by using wireless signal quality obtained at a plurality of times; or may obtain in real time a pass-through cost in a corresponding area by using real-time signal quality of a wireless signal; or may obtain a pass-through cost in a corresponding area by using predicted signal quality of a wireless signal.

Specifically, the intelligent execution apparatus may obtain the pass-through cost in the corresponding area in the statistical or voting manner by using the wireless signal quality obtained at a plurality of times, to generate a signal quality map; or may obtain in real time the pass-through cost in the corresponding area by using the real-time signal quality of the wireless signal, to update a signal quality map in real time; or may obtain the pass-through cost in the corresponding area by using the predicted signal quality of the wireless signal, to generate a signal quality map.

The statistical manner is to process together the wireless signal quality obtained at a plurality of times, for example, perform weighted processing, to obtain the pass-through cost in the corresponding area. The voting manner is to select, from the wireless signal quality obtained at the plurality of times, wireless signal quality obtained at some of the plurality of times, to obtain the pass-through cost in the corresponding area.

Specifically, whether to obtain the pass-through cost in the statistical or voting manner, or in real time, or in a prediction manner, or through a combination of any two of the manners may be determined with reference to an actual situation.

Optionally, when stability of the signal quality of the wireless signal is relatively good, the pass-through cost in the corresponding area may be obtained in the statistical manner; or when stability of the signal quality of the wireless signal is relatively poor, the pass-through cost in the corresponding area may be obtained in real time.

The stability of the signal quality of the wireless signal may be stability of a strength and/or the direction of the wireless signal. For example, when the change rate of the strength of the wireless signal is less than or equal to a predetermined value, or the change rate of the direction of the wireless signal is less than or equal to a predetermined value, it is considered that stability is relatively good. The change rate of the direction of the wireless signal may include a change rate of a pointing angle of the wireless signal, or the like.

Optionally, when the wireless signal is a predictable wireless signal, in other words, when the signal quality of the wireless signal at another moment and/or in another area can be predicted based on the signal quality of the wireless signal at a moment and/or in an area, it can be considered that the wireless signal is a predictable wireless signal.

Specifically, the intelligent execution apparatus performs positioning by using a satellite signal outdoors, records data generated at different times and different locations, such as positioning precision, quantities of visible satellites, distribution statuses of visible satellites caused by blocking, and areas in which satellites are located in orbits, and calculates a signal quality map for any future time point by using the data.

For example, the intelligent execution apparatus records GPS coordinates of an area, obtains a predicted distribution status of visible satellites with reference to a satellite area resolved from a GPS ephemeris, and may learn a blocking status of the area through a statistical method by comparing the distribution status of the visible satellites with an actually received satellite distribution status that exceeds a carrier-to-noise ratio threshold. The signal quality map may be generated based on blocking statuses at different locations.

Specifically, a distribution status of satellites in this area at a future moment may be determined based on the obtained blocking status, and an estimated error value in longitude and latitude calculation may be obtained based on constellation distribution. When the estimated error is less than a preset threshold, it is considered that signal quality in this area at the future moment is good, or when the estimated error is not less than a preset threshold, the signal quality is poor. In an area with heavy blocking, positioning cannot be performed, or positioning precision is extremely poor. This type of area is defined as an area with no signal. Therefore, a cost can be calculated, and a signal quality map can be generated.

For example, satellite arrangement in another area other than the first area at a first moment may be determined based on a satellite signal that is transmitted at the first moment and that is received in the another area; satellite arrangement in each first area at a second moment is determined based on the satellite arrangement in the another area at the first moment, a location relationship between the first area and the another area, and an operating pattern of a satellite; and positioning precision of a satellite signal in each first area at the second moment is predicted based on the satellite arrangement in each first area at the second moment. Optionally, when the map is generated, a pass-through cost in the first area at the second moment may be marked on the signal quality map.

It should be understood that there may be another implementation for the prediction manner of the signal quality of the wireless signal in this embodiment of the present invention, and details are not described herein.

Optionally, the signal quality map in this embodiment of the present invention may include a pass-through cost of each of a plurality of areas, and the pass-through cost of each area may include a plurality of pass-through costs, for example, may include predicted pass-through costs at various moments. Therefore, when path planning is performed, a corresponding path plan in an area may be obtained with reference to a pass-through cost of the area at each moment and a current moment when the apparatus moves to the area, to select a better path.

Therefore, in this embodiment of the present invention, the pass-through cost in each first area is obtained based on the pass-through distance of each of the plurality of first areas and the signal quality of the wireless signal in each first area, so that when the signal quality map is generated, the pass-through cost in each area can be marked in each area. Therefore, when the signal quality map is generated, not only a pass-through distance of an area but also signal quality of a wireless signal in the area can be considered, and the pass-through distance and the signal quality of the wireless signal are quantized into a pass-through cost, to obtain a better signal quality map. In this way, the signal quality map is more widely applied, better path planning can be implemented, and the pass-through distance and the signal quality are quantized into the pass-through cost, so that when performing path planning, a robot can obtain a pass-through path based on the pass-through cost, thereby reducing an operating time of the robot, and improving task execution efficiency.

Optionally, in this embodiment of the present invention, when the pass-through cost in the first area is obtained with reference to the pass-through distance of the first area and the signal quality of the wireless signal, a first pass-through cost component corresponding to the pass-through distance and a second pass-through cost component corresponding to the signal quality of the wireless signal may be calculated, and the pass-through cost for passing through the area may be obtained with reference to the first pass-through cost component and the second pass-through cost component.

In an implementation, the first pass-through cost component and the second pass-through cost component of the first area may be added, to obtain the pass-through cost of the first area.

In another implementation, weighted processing may be performed on the first pass-through cost component of the first area and the second pass-through cost component of the first area, to obtain the pass-through cost of the first area. A weighting coefficient may be set based on a specific case, for example, if a to-be-executed task has relatively high sensitivity to a pass-through distance of an area, a relatively high weighting coefficient may be set for a size.

In another implementation, the second pass-through cost component may be a coefficient that is multiplied by the first pass-through cost component to obtain the pass-through cost, and the pass-through cost in the first area may be obtained with reference to the first pass-through cost component and the coefficient.

It should be understood that in this embodiment of the present invention, in addition to the pass-through distance of the area and the signal quality of the wireless signal, another factor may be further considered. For example, a third pass-through cost component in each area is determined based on a contact surface status of the area. Therefore, the first pass-through cost component, the second pass-through cost component, and the third pass-through cost component may be added or weighted, to obtain a pass-through cost of the area.

Optionally, the obtained second pass-through cost component in each first area may be determined based on signal quality of a wireless signal in each area and a correspondence between a signal quality interval of a wireless signal and a pass-through cost.

For example, signal quality of wireless signals may be graded at three levels: good, medium, and poor. Each level includes a range of values that can be quantized, and each level may be corresponding to a different second pass-through cost component. After signal quality of a wireless signal is obtained, a level of the signal quality of the wireless signal may be determined, and a second pass-through cost component corresponding to the level may be obtained.

For example, good signal quality of a wireless signal is corresponding to a coefficient 1, medium signal quality of a wireless signal is corresponding to a coefficient 5, and poor signal quality of a wireless signal is corresponding to a coefficient 10. Pass-through costs corresponding to distances of an area are 10 (for a side-length distance) and 14 (for a diagonal distance). If signal quality of a wireless signal in the area is poor, the pass-through costs of the side-length distance and the diagonal distance in the area may be determined as 100 and 140; or if signal quality of a wireless signal in the area is medium, the pass-through costs of the side-length distance and the diagonal distance in the area may be determined as 50 and 70; or if signal quality of a wireless signal in the area is good, the pass-through costs of the side-length distance and the diagonal distance in the area may be determined as 10 and 14.

Optionally, in this embodiment of the present invention, a pass-through cost may be set on the signal quality map for each of a plurality of types of wireless signals with reference to the pass-through distance. When a task is executed by using the signal quality map, a wireless signal usable in the task may be determined, and path planning may be performed by using a pass-through cost obtained based on the usable wireless signal.

Optionally, in this embodiment of the present invention, a pass-through cost of each area may be obtained with reference to at least one to-be-executed task type. In addition, optionally, a pass-through cost corresponding to the task type may be marked on the signal quality map, and when a task is executed by using the signal quality map, a pass-through cost corresponding to the task may be determined, to perform path planning. The to-be-executed task includes but is not limited to at least one of positioning, communication, network connection, detection, and identification.

For example, the intelligent execution apparatus is located in indoor space, and mainly performs positioning by using a combination of WiFi and Bluetooth. In a continuous running process, the intelligent execution apparatus may separately calculate pass-through costs based on strength, positioning precision, and quantities of observable beacons that are of the two wireless signals in different areas, so that a signal quality map including two types of signal quality is obtained. Performing path planning on the signal quality map can ensure positioning precision of the intelligent execution apparatus.

It is assumed that pass-through distances of all areas are the same, and pass-through costs corresponding to a side-length distance and a diagonal distance are respectively 10 and 14. The signal quality map may be generated in the following manner: If signals with qualified strength can be received in an area from at least four WiFi APs or at least four Bluetooth beacons, pass-through costs of the signals in the area are denoted as 20 and 28; if an area to which an observed WiFi AP or beacon belongs has relatively good signal quality and relatively high positioning precision, pass-through costs in the area are 10 and 14; if signals can be received in an area from less than three and greater than 1 WiFi AP or Bluetooth beacon, pass-through costs are denoted as 50 and 70; or if signals can be received from only one AP or beacon, pass-through costs are denoted as 100 and 140; and another area with no signal received is denoted as an obstacle.

Optionally, a wireless pass-through cost is determined with reference to a wireless signal quality requirement of a task type and signal quality of a wireless signal. For example, if a signal a is used in both a task type A and a task type B, and a requirement of the task type A for quality of the signal a is higher than a signal quality requirement of the task type B, with same signal quality, a pass-through cost component (or a coefficient multiplied by a first pass-through cost component corresponding to a pass-through distance) corresponding to the task type A is greater than a pass-through cost component (or a coefficient multiplied by a first pass-through cost component corresponding to a pass-through distance) corresponding to the task type B.

With reference to a manner A and a manner B, the following describes how to obtain a pass-through cost in each area with reference to a to-be-executed task type when a signal quality map is generated.

Manner A

At least one to-be-executed task type is obtained; a second pass-through cost component of each task type in each first area is obtained based on signal quality of at least one type of available wireless signal of each of the at least one task type in each first area; and a pass-through cost of each task type in each first area is calculated based on the first pass-through cost component of each first area and the second pass-through cost component of each task type in each first area.

Optionally, the signal quality map may be generated based on the pass-through cost of each task type in each first area, and the signal quality map includes the pass-through cost of each task type in each first area.

In other words, for each task type, a pass-through cost of the task type in each area is calculated. In this way, when path planning of a task type is performed, a pass-through cost of each area for the task type may be directly obtained, to implement better path planning.

When a second pass-through cost component of each task type in an area is calculated, a pass-through cost may be determined with reference to a wireless signal quality requirement of the task type and signal quality of a wireless signal.

Optionally, the at least one task type includes a first task type, and a second pass-through cost component of the first task type in each first area is determined based on signal quality of at least one type of wireless signal whose signal quality meets a predetermined condition and that is in an available wireless signal of the first task type in each first area.

Optionally, the at least one type of wireless signal that meets the predetermined condition may be at least one type of wireless signal whose value of signal quality is greater than a predetermined value, or may be at least one type of wireless signal whose signal quality is best.

Specifically, when there are a plurality of types of available wireless signals for a task, an environment characteristic with relatively good quality may be selected when the intelligent execution apparatus moves to the area and executes the to-be-executed task. Therefore, a pass-through cost component can be calculated by using the environment characteristic with relatively good quality. For example, when a task is to perform positioning, if signals for positioning in an area include an Access Point ( AP) signal and a geomagnetic signal, positioning precision of these two types of signals may be obtained, and higher positioning precision may be determined as a parameter used for determining a pass-through cost in the area.

Certainly, for the first task type, if there are a plurality of types of available wireless signals in an area, the second pass-through cost component may be calculated with reference to signal quality of the plurality of types of wireless signals, for example, weighted processing may be performed on the signal quality of the plurality of types of wireless signals, and signal quality obtained through the weighted processing may be used for calculating the second pass-through cost component. Alternatively, the second pass-through cost components are separately calculated based on the signal quality of the plurality of types of wireless signals, and weighted processing is performed on the obtained plurality of second pass-through cost components, to obtain a final available second pass-through cost component. Certainly, in addition to weighted processing, another processing manner may be used, which may be specifically determined based on an actual situation. For example, if there are a plurality of types of wireless signals, the plurality of types of wireless signals may be used together, processing similar to addition processing may be performed on signal quality of the plurality of types of wireless signals, and the second pass-through cost component may be further obtained through calculation.

Optionally, the first area may be any area included in the candidate area, or may be an area that meets the following condition: the signal quality of the at least one type of wireless signal whose signal quality is best and that is in an available wireless signal of the first task type in each first area meets a wireless signal requirement of the first task type.

Optionally, at least one second area is determined, and the signal quality of the at least one type of wireless signal whose signal quality is best and that is in the available wireless signal of the first task type in the second area does not meet the wireless signal requirement of the first task type; and when path planning is performed, the second area may be considered as an obstacle.

Optionally, each of the at least one second area is marked as an obstacle on the signal quality map for the first task type.

Manner B

A plurality of to-be-executed task types are obtained; a second pass-through cost component of a whole of the plurality of task types in each first area is obtained based on signal quality of at least one type of available wireless signal of each of the plurality of task types; and a pass-through cost of the whole of the plurality of task types in each first area is calculated based on the first pass-through cost component of each first area and the second pass-through cost component of the whole of the plurality of task types in each first area.

Optionally, the signal quality map may be generated based on the pass-through cost of the whole of the plurality of task types in each first area, and the signal quality map includes the pass-through cost of the whole of the plurality of task types in each first area.

In other words, the plurality of task types may be considered as a whole, and the pass-through cost of the whole of the plurality of task types in each area may be obtained. In this way, when path planning required for executing the plurality of task types is performed, a pass-through cost of the whole of the plurality of task types in each area may be directly obtained, to implement better path planning.

Optionally, a second pass-through cost component of each task type in each first area is obtained based on signal quality of at least one type of available wireless signal of each of the plurality of task types in each first area; and weighted processing is performed on a plurality of second pass-through cost components of the plurality of task types in each first area, to obtain the second pass-through cost component of the whole of the plurality of task types in the first area.

In addition to weighted processing, another processing manner may be used, which may be specifically determined based on an actual situation. For example, processing similar to addition processing may be performed on signal quality of the plurality of types of wireless signals, and the second pass-through cost component may be further obtained through calculation. Alternatively, addition processing is performed on a plurality of second pass-through cost components corresponding to a plurality of task types, and a sum value is used as a pass-through cost corresponding to the whole of the plurality of task types.

It should be understood that in this embodiment of the present invention, when a second pass-through cost component of the whole of the plurality of task types in an area is calculated, the used at least one type of available wireless signal of each task type may be all available wireless signals of a corresponding task type in the area, or may be some available wireless signals of a corresponding task type in the area, for example, at least one type of wireless signal with best signal quality.

Optionally, the first area may be any area that needs to be included in the signal quality map, or may be an area that meets the following condition: the signal quality of the available wireless signal of each of the plurality of task types in each first area meets a wireless signal requirement of each task type.

Optionally, at least one third area is determined, and signal quality of a wireless signal corresponding to at least one of the plurality of task types in the third area does not meet a signal quality requirement of the at least one task type; and when path planning is performed, the third area may be considered as an obstacle.

Optionally, each of the at least one third area is set as an obstacle on the signal quality map for the plurality of task types.

It should be understood that when the signal quality map is generated, the foregoing manner A and manner B may be combined for use.

For example, tasks to be executed by using the signal quality map include a task 1, a task 2, and a task 3, pass-through costs are respectively calculated for the task 1, the task 2, and the task 3, and a total pass-through cost of the task 1, the task 2, and the task 3 is calculated; or a pass-through cost of the task 1 is calculated, and a pass-through cost of the task 2 and the task 3 is calculated.

It should be understood that in this embodiment of the present invention, classification of "types" of wireless signals may indicate differences of signal types, for example, a satellite signal and a WiFi signal are considered as different types of wireless signals; or may indicate different sources of a same type of wireless signal, for example, wireless signals from different APs may be considered as different types of wireless signals. A distinguishing dimension of "type" may be determined based on a specific actual situation. For example, in some cases, wireless signals may be classified into a positioning signal and a pass-through signal, or in some cases, signals of a same type from different transmit ends are considered as different types of signals.

Similarly, classification of "types" of tasks may also be determined based on a specific situation, for example, agricultural use and industrial use are different task types, and for example, positioning and communication are different task types.

220. Obtain a start location and a target location.

230. Perform path planning based on the pass-through cost for passing through each first area, to determine a pass-through path from the start location to the target location, where the pass-through path includes an area passed through from the start location to the target location.

Optionally, in this embodiment of the present invention, the path from the start location to the target location may be determined by using the signal quality map.

When path planning is performed by using the signal quality map, a plurality of algorithms may be used, for example, a Dijksra algorithm, an A* algorithm, and the like.

For ease of understanding, the following describes how to implement path planning with reference to the A* searching algorithm.

In the A* algorithm, the following formula 1 is required:

$$F(n) = G(n) + H(n) \qquad \text{formula 1}$$

F(n) is an estimated pass-through cost for passing through an start node, an intermediate node n, and then a target node; G(n) is an actually obtained pass-through cost for passing through the start node to the intermediate node n; and H(n) is an estimated pass-through cost of an optimal path from the intermediate node n to the target node.

H(n) may be calculated by using a Manhattan algorithm or another algorithm, and is not specifically limited herein.

A key to find out the optimal path lies in selection of an evaluation function F(n). For clear understanding of the algorithm, the following specifically describes an execution manner of the algorithm.

Step 1: Add the start node to an enabled list.

Step 2: Repeat the following operations:

a. Find a node with a lowest value of F in the enabled list, namely, a current node.

b. Switch the current node to a disabled list.

c. Perform the following operations on each adjacent node of the current node:

(1) If the adjacent node cannot be passed through or is in the disabled list, ignore the node.

(2) If the adjacent node is not in the enabled list, add the adjacent node to the enabled list, use the current node as a traceback node of the node, and record values of F, G, and H of the node.

(3) If the adjacent node is already in the enabled list, use a value of G as a reference to check whether a new path is better; and if the new path is better, use a traceback node of the adjacent node as the current node, and re-calculate values of G and F of the node.

d. Stop the process in the following two cases:

(1) The target node is already added to the disabled list, and in this case, the path has been found.

(2) No target path is found, and in this case, the enabled list is empty, indicating that no path is found.

Step 3: Save a path. A path from the target node to the start node along a traceback node of each node is a selected path.

For clearer understanding of an implementation of the A* algorithm, the following is described with reference to FIG. 3 to FIG. 6.

FIG. 3 shows a location relationship between a start node, an obstacle, and a target node.

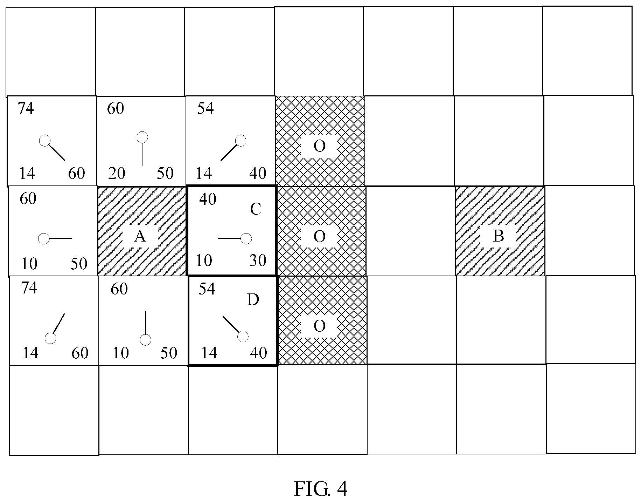

As shown in FIG. 4, FIG. 5, and FIG. 6, a path is calculated based on only a pass-through cost corresponding to a pass-through distance of a node. It is assumed that side-length distances of nodes are consistent, diagonal distances of the nodes are consistent, a pass-through cost corresponding to a side-length distance of each node may be denoted as 10, and a pass-through cost corresponding to a diagonal distance of each node may be denoted as 14.

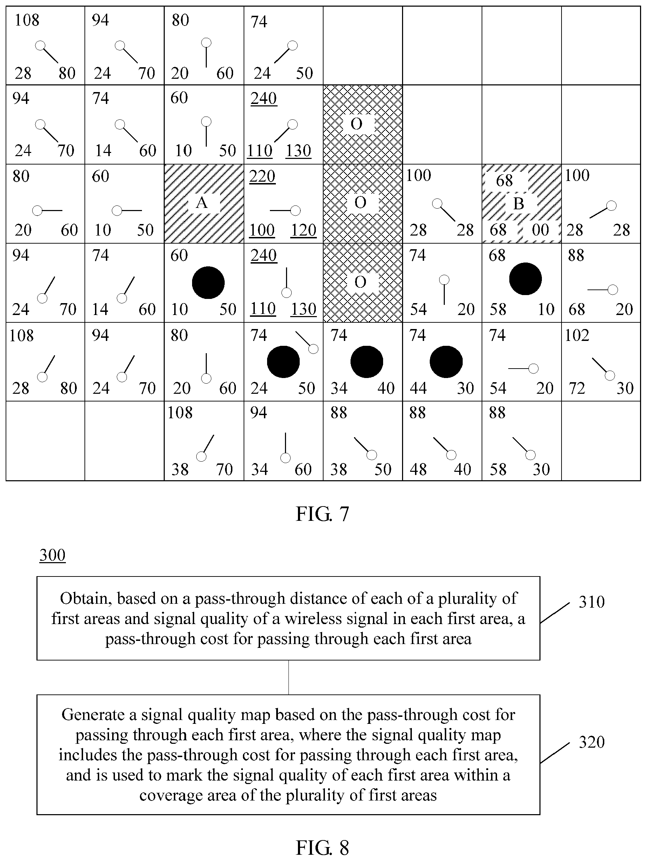

As shown in FIG. 7, a path is calculated based on a pass-through cost corresponding to a pass-through distance of a node and signal quality of a wireless signal.

As shown in FIG. 4 to FIG. 7, a value of G is shown in a lower left part, a value of H is shown in a lower right part, a value of F is shown in an upper left part, and

⟋◯ indicates a traceback node of a current node.

As shown in FIG. 3, a node A is a start node, a node B is a target node, and three nodes O between the node A and the node B are obstacles, namely, nodes that cannot be passed through.

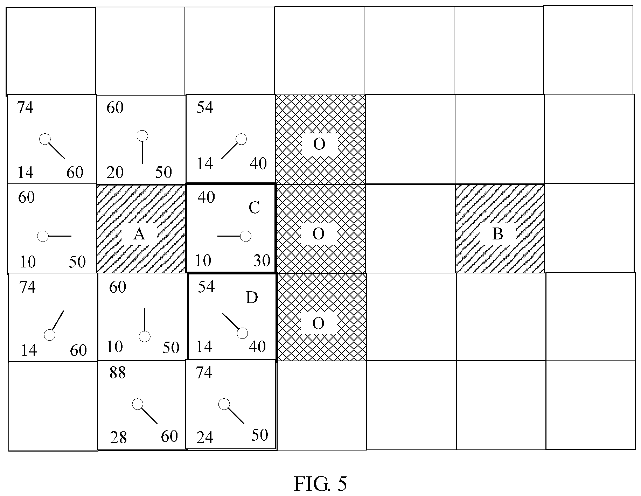

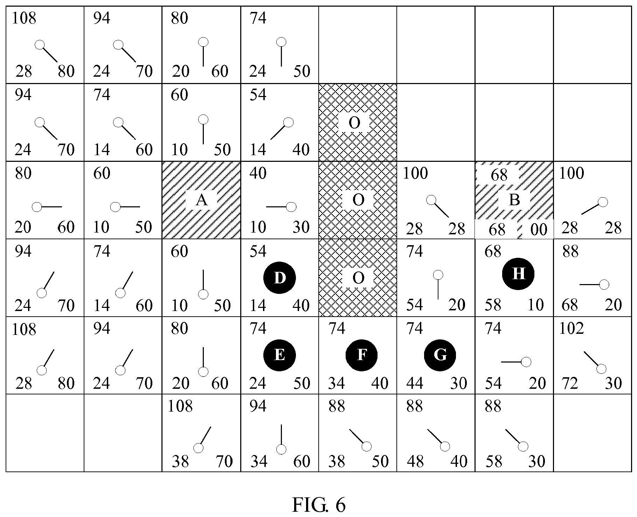

As shown in FIG. 4, after the start node is switched to the disabled list, the enabled list is searched for a node with a lowest value of F, namely, a node C immediately adjacent to a right side of the start node A. The node C is added to the disabled list, and then a node adjacent to the node C is checked. Because a left node of the node C is the start node, and a right node of the node C is an obstacle, the two nodes can be ignored. Another two adjacent nodes of the node C are added to the enabled list, and then a value of G is used as a reference to check in the enabled list whether a new path is better. It is found that nodes above and beneath the node C are directly connected to the start node, and a path is better. Because values of F of the nodes above and beneath the node C are consistent, a node last added to the list may be selected, or a node may be randomly selected. For example, as shown in FIG. 5, a node D is selected. Selection continues until an optimal path is found. A finally obtained path may be shown in FIG. 6, and nodes that need to be passed through from the start node A to an end node (the target node) B include a node D, a node E, a node F, a node G, and a node H.

FIG. 7 shows an optimal path that is from the start node A to the end node B and that is obtained with reference to wireless signal quality and a pass-through distance of an area. In a signal quality map shown in FIG. 7, signal quality of three nodes on a left side of an obstacle is poor, and pass-through costs are changed to 100 and 140. It can be seen from the figure that traceback nodes of the upper and lower two nodes of the three nodes with poor signal quality have changed. Based on the A* algorithm and an updated cost, nodes that need to be passed through in an optimal path from the node A to the node B include a node I, a node E, a node F, a node G, and a node H.

Therefore, it can be seen from FIG. 3 to FIG. 7 that a path finally planned by using a signal quality map obtained based on signal quality of a wireless signal and a pass-through distance is different from a path finally planned by using a signal quality map obtained based on only a pass-through distance. Therefore, when path planning is performed by using the signal quality map generated based on the signal quality of the wireless signal and the pass-through distance, more factors may be considered, so that a planned path is better.

FIG. 8 is a schematic flowchart of a map generation method 300 according to an embodiment of the present invention. As shown in FIG. 8, the method 300 includes the following content.

310. Obtain, based on a pass-through distance of each of a plurality of first areas and signal quality of a wireless signal in each first area, a pass-through cost for passing through each first area.

320. Generate a signal quality map based on the pass-through cost for passing through each first area, where the signal quality map includes the pass-through cost for passing through each first area, and is used to mark the signal quality of each first area within a coverage area of the plurality of first areas.

Optionally, for a specific implementation of the map generation method shown in FIG. 8, refer to the description in the method 200. For brevity, details are not described herein again.

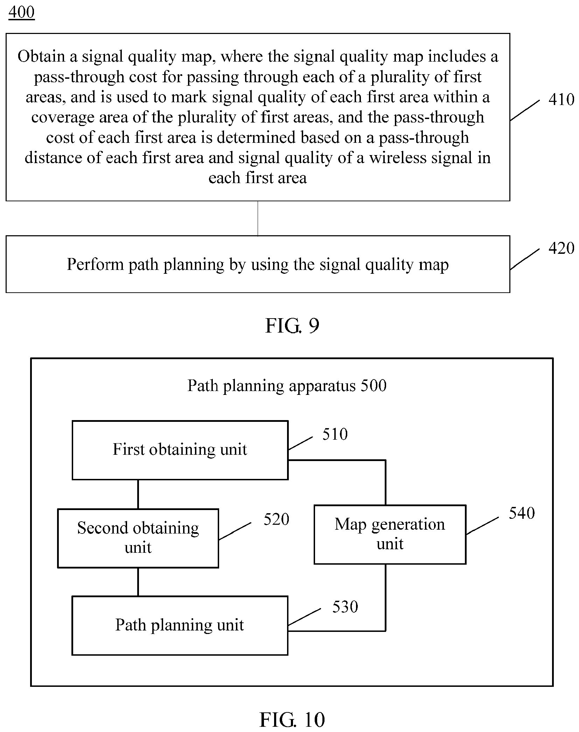

FIG. 9 is a schematic flowchart of a path planning method 400 according to an embodiment of the present invention. As shown in FIG. 9, the method 400 includes the following content.

410. Obtain a signal quality map, where the signal quality map includes a pass-through cost for passing through each of a plurality of first areas, and is used to mark signal quality of each first area within a coverage area of the plurality of first areas, and the pass-through cost of each first area is determined based on a pass-through distance of each first area and signal quality of a wireless signal in each first area.

420. Perform path planning by using the signal quality map.

In an implementation, when signal quality of a wireless signal at the current location is less than or equal to a predetermined value, a location to which a robot is to move is selected from the plurality of locations based on the map.

Therefore, a robot does not actively move to an area with relatively poor signal quality of a wireless signal, so that stability of wireless signal input is improved, and robustness of a corresponding function of the robot is improved. Further, when the robot finds that signal quality of a wireless signal is poor, the robot can actively move to, based on the map, an area with relatively good signal quality of a wireless signal, so that robot use stability is improved, and user experience is improved.

In another implementation, a start location and a target location are obtained, and a path from the start location to the target location is determined by using the map.

Optionally, for a specific implementation of the path planning method shown in FIG. 9, refer to the description in the method 200. For brevity, details are not described herein again.

FIG. 10 is a schematic block diagram of a path planning apparatus 500 according to an embodiment of the present invention. As shown in FIG. 10, the path planning apparatus 500 includes: a first obtaining unit 510, configured to obtain, based on a pass-through distance of each of a plurality of first areas and signal quality of a wireless signal in each first area, a pass-through cost for passing through each first area; a second obtaining unit 520, configured to obtain a start location and a target location; and a path planning unit 530, configured to perform path planning based on the pass-through cost for passing through each first area, to determine a pass-through path from the start location to the target location, where the pass-through path includes an area passed through from the start location to the target location.

Optionally, the apparatus 500 further includes a map generation unit 540, configured to: generate a signal quality map based on the pass-through cost for passing through each first area, where the signal quality map includes the pass-through cost for passing through each first area, and is used to mark the signal quality of each first area within a coverage area of the plurality of first areas; and the path planning unit 530 is further configured to: based on the signal quality map, determine the pass-through path based on a pass-through cost for passing through each area within a coverage area of the plurality of areas.

Optionally, the first obtaining unit 510 is further configured to: determine, based on the pass-through distance of each first area, a first pass-through cost component corresponding to the pass-through distance of each first area; determine, based on the signal quality of the wireless signal in each first area, a second pass-through cost component corresponding to the signal quality of the wireless signal in each first area; and calculate, based on the first pass-through cost component and the second pass-through cost component of each first area, the pass-through cost for passing through each first area.

Optionally, the first obtaining unit 510 is further configured to: obtain at least one task type to be executed when the pass-through path is passed through; obtain, based on signal quality of at least one type of available wireless signal of each of the at least one task type in each first area, a second pass-through cost component corresponding to each task type at each first area; and calculate, based on the first pass-through cost component of each first area and the second pass-through cost component corresponding to each task type in each first area, a pass-through cost for passing through each first area when each task type is executed; and the path planning unit 530 is further configured to determine, based on the pass-through cost for passing through each first area when each task type is executed, the pass-through path used for executing each task type.

Optionally, the at least one task type includes a first task type, and the first obtaining unit 510 is further configured to determine, based on signal quality of at least one type of wireless signal whose signal quality meets a predetermined condition and that is in an available wireless signal of the first task type in each first area, a second pass-through cost component corresponding to the first task type in each first area.

Optionally, the first obtaining unit 510 is further configured to determine, based on signal quality of at least one type of wireless signal whose signal quality is best and that is in the available wireless signal of the first task type in each first area, the second pass-through cost component corresponding to the first task type in each first area, where the first area is an area that meets the following condition: the at least one type of wireless signal whose signal quality is best and that is in the available wireless signal of the first task type in the first area meets a wireless signal requirement of the first task type.

Optionally, the first obtaining unit 510 is further configured to determine at least one second area, where the signal quality of the at least one type of wireless signal whose signal quality is best and that is in the available wireless signal of the first task type in the second area does not meet the wireless signal requirement of the first task type; and the path planning unit 530 is further configured to: when performing path planning, consider each of the at least one second area as an obstacle.

Optionally, the first obtaining unit 510 is further configured to: obtain a plurality of task types to be executed when the pass-through path is passed through; obtain, based on signal quality of at least one type of available wireless signal of each of the plurality of task types, a second pass-through cost component corresponding to a whole of the plurality of task types in each first area; and calculate, based on the first pass-through cost component of each first area and the second pass-through cost component corresponding to the whole of the plurality of task types in each first area, a pass-through cost corresponding to the whole of the plurality of task types in each first area; and the path planning unit 530 is further configured to determine, based on the pass-through cost corresponding to the whole of the plurality of task types in each first area, the pass-through path used for executing the plurality of task types.

Optionally, the first obtaining unit 510 is further configured to: obtain, based on signal quality of at least one type of available wireless signal of each of the plurality of task types in each first area, a second pass-through cost component corresponding to each task type in each first area; and perform weighted processing on a plurality of second pass-through cost components corresponding to the plurality of task types in each first area, to obtain the second pass-through cost component corresponding to the whole of the plurality of task types in the first area.

Optionally, the first area is an area that meets the following condition: the signal quality of the available wireless signal of each of the plurality of task types in each first area meets a wireless signal requirement of each task type.

Optionally, the first obtaining unit 510 is further configured to determine at least one third area, where signal quality of a wireless signal corresponding to at least one of the plurality of task types in the third area does not meet a signal quality requirement of the at least one task type; and the path planning unit 530 is further configured to: when performing path planning, consider each of the at least one third area as an obstacle.

Optionally, the first obtaining unit 510 is further configured to determine, based on signal quality of a wireless signal in each area and a correspondence between a signal quality interval of a wireless signal and a pass-through cost component, the obtained second pass-through cost component in each first area.

Optionally, the first obtaining unit 510 is further configured to: obtain, in a statistical manner based on the pass-through distance of each first area and signal quality that is of wireless signals in each first area and that is obtained at a plurality of times, the pass-through cost for passing through each first area; or obtain, in real time based on the pass-through distance of each first area and real-time signal quality of a wireless signal in each first area, the pass-through cost for passing through each first area; or obtain, based on the pass-through distance of each first area and predicted signal quality of a wireless signal in each first area, the pass-through cost for passing through each first area.

Optionally, the first obtaining unit 510 is further configured to: when a change rate of a direction of a wireless signal and/or a change rate of strength of the wireless signal in each first area are/is less than or equal to a first threshold, obtain, in a statistical manner based on the pass-through distance of each first area and the signal quality that is of the wireless signals in each first area and that is obtained at a plurality of times, the pass-through cost for passing through each first area.

Optionally, the first obtaining unit 510 is further configured to: when a change rate of a direction of a wireless signal and/or a change rate of strength of the wireless signal in each first area are/is greater than a second threshold, obtain, in real time based on the pass-through distance of each first area and the real-time signal quality of the wireless signal in each first area, the pass-through cost for passing through each first area.

Optionally, the wireless signal is a satellite signal, the signal quality of the wireless signal includes positioning precision of the wireless signal, and the first obtaining unit 510 is further configured to: before obtaining, based on the pass-through distance of each first area and the predicted signal quality of the wireless signal in each first area, the pass-through cost for passing through each first area, determine, based on a satellite signal that is transmitted at a first moment and that is received in another area other than each first area, satellite arrangement in the another area at the first moment; determine, based on the satellite arrangement in the another area at the first moment, a location relationship between each first area and the another area, and an operating pattern of a satellite, satellite arrangement in each first area at a second moment; and predict, based on the satellite arrangement in each first area at the second moment, positioning precision of a satellite signal in each first area at the second moment.

It should be understood that the path planning apparatus 500 may perform the method shown in FIG. 2. For brevity, details are not described herein again.

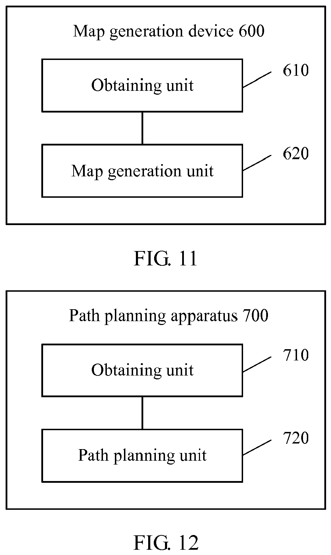

FIG. 11 is a schematic block diagram of a map generation device 600 according to an embodiment of the present invention. As shown in FIG. 11, the device 600 includes an obtaining unit 610 and a map generation unit 620. The obtaining unit 610 is configured to obtain, based on a pass-through distance of each of a plurality of first areas and signal quality of a wireless signal in each first area, a pass-through cost for passing through each first area; and the map generation unit 620 is configured to generate a signal quality map based on the pass-through cost for passing through each first area, where the signal quality map includes the pass-through cost for passing through each first area, and is used to mark the signal quality of each first area within a coverage area of the plurality of first areas.

It should be understood that, for a manner of obtaining the pass-through cost by the obtaining unit 610 and a manner of generating the map by the map generation unit 620, refer to the description of the foregoing method. For brevity, details are not described herein again.

FIG. 12 is a schematic block diagram of a path planning apparatus 700 according to an embodiment of the present invention. As shown in FIG. 12, the apparatus 700 includes an obtaining unit 710 and a path planning unit 720. The obtaining unit 710 is configured to obtain a signal quality map, where the signal quality map includes a pass-through cost for passing through each first area, and is used to mark signal quality of each first area within a coverage area of the plurality of first areas, and the pass-through cost of each first area is determined based on a pass-through distance of each of the plurality of first areas and signal quality of a wireless signal in each first area. The path planning unit 720 is configured to perform path planning by using the signal quality map.

It should be understood that, for a manner of obtaining the signal quality map by the obtaining unit 710 and a manner of performing path planning by the path planning unit 720, refer to the description of the foregoing method. For brevity, details are not described herein again.

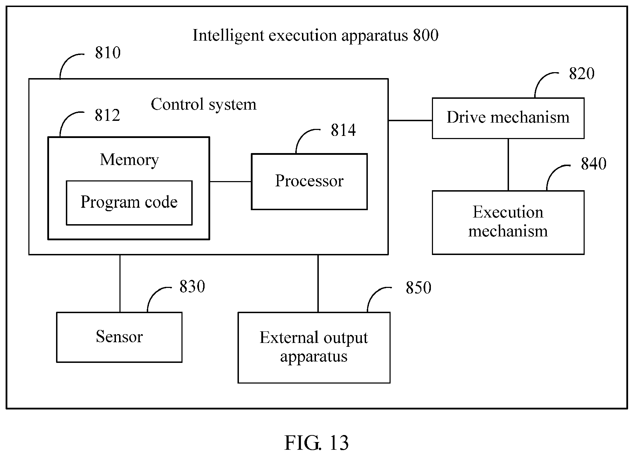

FIG. 13 is a schematic block diagram of an intelligent execution apparatus 800 according to an embodiment of the present invention. The intelligent execution apparatus 800 may be a machining apparatus that automatically executes work, for example, may be a robot, a self-driving vehicle, or an unmanned aerial vehicle.

As shown in FIG. 13, the intelligent execution apparatus 800 may include a control system 810, a drive mechanism 820, a sensor 830, an execution mechanism 840, and an external output apparatus 850.

The control system 810 may send an instruction to the drive mechanism 820, and the drive mechanism 820 may drive the execution mechanism 840 to perform a corresponding action based on the instruction sent by the control system 810.

The control system 810 may externally output a signal by using the external output apparatus 850. Optionally, the external output apparatus 850 may include a display, a voice output apparatus, a wireless transmitter, or the like, where the display may display quantity of electricity, a planned path, or the like, the voice output apparatus may coordinate with a voice detection sensor, to implement a dialog with a user or the like, and the wireless transmitter may send a wireless signal or the like.

The sensor 830 may include an internal information sensor and an external information sensor. The internal information sensor may detect a working status of each part of the intelligent execution apparatus, for example, a location, a speed, acceleration, and the like of each joint included in the execution mechanism 840. The external information sensor may detect external information, for example, may obtain the wireless signal described in the embodiments of the present invention or the like, and may further obtain other information, for example, obtain a voice instruction that is input by the user.

The sensor 830 may provide the obtained information for the control system 810, and the control system 810 may send, based on the information provided by the sensor, an instruction to the drive mechanism 820, and/or externally output a signal by using the external output apparatus 850.

Optionally, the drive mechanism 820 may be a power driving apparatus, such as a stepper motor or a servo motor.

Optionally, the execution mechanism 840 is configured to perform a corresponding action based on a drive of the drive mechanism 820. The execution mechanism 840 may use a space open-chain linkage mechanism, where a revolute pair may be referred to as a joint, and a freedom degree of the intelligent execution mechanism may be determined by a quantity of joints. For example, the intelligent execution mechanism 800 is a robot, and the execution mechanism may include a hand, a wrist, an arm, a walking part, and the like, and parts may be optionally connected to each other by using a joint.

Optionally, the control system 810 may include a processor 814 and a memory 812. The memory 812 may store program code, and the processor 814 may execute the program code stored in the memory 812. The processor 814 communicates with the memory 812 by using an internal connection path.

Optionally, the processor 814 may invoke the program code stored in the memory 812, to perform the method shown in FIG. 2, FIG. 8, or FIG. 9. In addition, optionally, the processor 814 may invoke the program code stored in the memory 812, to send an instruction to the drive mechanism 820. In addition, optionally, the processor 814 may invoke the program code stored in the memory 812, to externally output a signal by using the external output apparatus 850.

It should be understood that the intelligent execution mechanism 800 shown in FIG. 13 is only an optional embodiment of the present invention. The intelligent execution apparatus in this embodiment of the present invention may further include another mechanism, for example, the intelligent execution apparatus 800 may not include the external output apparatus, or a wireless transceiver included in the external output apparatus and a receiver in the sensor may be integrated. It should be understood that in the present invention, the processor in this embodiment of the present invention may be an integrated circuit chip, and has a signal processing capability. The processor may be a general purpose processor, a Digital Signal Processor (DSP), an Application-Specific Integrated Circuit(ASIC), a Field Programmable Gate Array (FPGA) or another programmable logical device, a discrete gate or transistor logic device, or a discrete hardware component. It may implement or perform the methods, the steps, and logical block diagrams that are disclosed in the embodiments of the present invention. The general purpose processor may be a microprocessor, or the processor may be any conventional processor or the like.

The memory in the embodiments of the present invention may be a volatile memory or a nonvolatile memory, or may include both a volatile memory and a nonvolatile memory. The nonvolatile memory may be a Read-Only Memory (ROM), a Programmable ROM (PROM), an erasable programmable read-only memory (Erasable PROM, EPROM), an electrically erasable programmable read-only memory (Electrically EPROM, EEPROM), or a flash memory. The volatile memory may be a Random Access Memory (RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct Rambus dynamic random access memory (Direct Rambus RAM, DR RAM). It should be noted that the memory of the systems and methods described in this specification includes but is not limited to these and any memory of another proper type.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present invention, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

**Claims**

1. A path planning method (200), comprising:

   obtaining (210), based on a pass-through distance of each of a plurality of first areas and signal quality of a wireless signal in each first area, a pass-through cost for passing through each first area;
   obtaining (220) a start location and a target location; and
   performing (230) path planning based on the pass-through cost for passing through each first area, to determine a pass-through path from the start location to the target location, wherein the pass-through path comprises an area passed through from the start location to the target location;
   **characterised in that** the signal quality of the wireless signal includes a change rate of a direction of the wireless signal and a positioning precision of the wireless signal.

2. The method (200) according to claim 1, wherein the method further comprises:

   generating (320) a signal quality map based on the pass-through cost for passing through each first area, wherein the signal quality map comprises the pass-through cost for passing through each first area, and is used to mark the signal quality of each first area; and
   the performing (230) path planning based on the pass-through cost for passing through each first area, to determine a pass-through path from the start location to the target location comprises:
   based on the signal quality map, determining (420) the pass-through path based on the pass-through cost for passing through each first area.

3. The method (200) according to claim 1 or 2, wherein the obtaining (210), based on a pass-through distance of each of a plurality of first areas and signal quality of a wireless signal in each first area, a pass-through cost for passing through each first area comprises:

   determining, based on the pass-through distance of each first area, a first pass-through cost component corresponding to the pass-through distance of each first area;
   determining, based on the signal quality of the wireless signal in each first area, a second pass-through cost component corresponding to the signal quality of the wireless signal in each first area; and
   calculating, based on the first pass-through cost component and the second pass-through cost component of each first area, the pass-through cost for passing through each first area.

4. The method (200) according to claim 3, wherein the method further comprises:

obtaining at least one task type, wherein the at least one task type is to be executed when the pass-through path is passed through;
the determining, based on the signal quality of the wireless signal in each first area, a second pass-through cost component corresponding to the signal quality of the wireless signal in each first area comprises:
obtaining, based on signal quality of at least one type of available wireless signal usable in each of the at least one task type in each first area, a second pass-through cost component corresponding to each task type at each first area;
the calculating, based on the first pass-through cost component and the second pass-through cost component of each first area, the pass-through cost for passing through each first area comprises:
calculating, based on the first pass-through cost component of each first area and the second pass-through cost component corresponding to each task type in each first area, a pass-through cost for passing through each first area when each task type is executed; and
the performing (230) path planning based on the pass-through cost for passing through each first area comprises:
determining, based on the pass-through cost for passing through each first area when each task type is executed, a pass-through path used for executing each task type.

5. The method (200) according to claim 4, wherein the at least one task type comprises a first task type, and the obtaining a second pass-through cost component corresponding to each task type in each first area comprises:
determining, based on signal quality of at least one type of wireless signal whose signal quality meets a predetermined condition and that is in an available wireless signal usable in the first task type in each first area, a second pass-through cost component corresponding to the first task type in each first area.

6. The method (200) according to claim 5, wherein the determining a second pass-through cost component corresponding to the first task type in each first area comprises:
determining, based on signal quality of at least one type of wireless signal whose signal quality is best and that is in the available wireless signal usable in the first task type in each first area, the second pass-through cost component corresponding to the first task type in each first area, wherein the first area is an area that meets the following condition:
the at least one type of wireless signal whose signal quality is best and that is in the available wireless signal usable in the first task type in the first area meets a wireless signal requirement of the first task type.

7. The method (200) according to claim 3, wherein the method further comprises:

obtaining a plurality of task types, wherein the plurality of task types is to be executed when the pass-through path is passed through;
the obtaining, based on the signal quality of the wireless signal in each first area, a second pass-through cost component corresponding to the signal quality of the wireless signal in each first area comprises:
obtaining, based on signal quality of at least one type of available wireless signal usable in each of the plurality of task types, a second pass-through cost component corresponding to a whole of the plurality of task types in each first area;
the calculating, based on the first pass-through cost component and the second pass-through cost component of each first area, the pass-through cost for passing through each first area comprises:
calculating, based on the first pass-through cost component of each first area and the second pass-through cost component corresponding to the whole of the plurality of task types in each first area, a pass-through cost corresponding to the whole of the plurality of task types in each first area; and
the performing (230) path planning based on the pass-through cost for passing through each first area comprises:
determining, based on the pass-through cost corresponding to the whole of the plurality of task types in each first area, the pass-through path used for executing the plurality of task types.

8. The method (200) according to any one of claims 3 to 7, wherein the determining, based on the signal quality of the wireless signal in each first area, a second pass-through cost component corresponding to the signal quality of the wireless signal in each first area comprises:
determining, based on signal quality of a wireless signal in each area and a correspondence between a signal quality interval of a wireless signal and a pass-through cost component, the obtained second pass-through cost component in each first area.

**9.** The method (200) according to any one of claims 1 to 8, wherein the obtaining (210), based on a pass-through distance of each of a plurality of first areas and signal quality of a wireless signal in each first area, a pass-through cost for passing through each first area comprises:

obtaining, in a statistical manner based on the pass-through distance of each first area and signal quality that is of wireless signals in each first area and that is obtained at a plurality of times, the pass-through cost for passing through each first area; or

obtaining, in real time based on the pass-through distance of each first area and real-time signal quality of a wireless signal in each first area, the pass-through cost for passing through each first area; or

obtaining, based on the pass-through distance of each first area and predicted signal quality of a wireless signal in each first area, the pass-through cost for passing through each first area.

**10.** A path planning apparatus (500), comprising:

a first obtaining unit (510), configured to obtain (210), based on a pass-through distance of each of a plurality of first areas and signal quality of a wireless signal in each first area, a pass-through cost for passing through each first area;

a second obtaining unit (520), configured to obtain (220) a start location and a target location; and

a path planning unit (530), configured to perform (230) path planning based on the pass-through cost for passing through each first area, to determine a pass-through path from the start location to the target location, wherein the pass-through path comprises an area passed through from the start location to the target location; **characterised in that** the signal quality of the wireless signal includes a change rate of a direction of the wireless signal and a positioning precision of the wireless signal.

**11.** The apparatus (500) according to claim 10, wherein the apparatus further comprises a map generation unit (540), configured to:

generate (320) a signal quality map based on the pass-through cost for passing through each first area, wherein the signal quality map comprises the pass-through cost for passing through each first area, and is used to mark the signal quality of each first area; and

the path planning unit (530) is further configured to:

based on the signal quality map, determine (420) the pass-through path based on the pass-through cost for passing through each first area.

**12.** The apparatus (500) according to claim 10 or 11, wherein the first obtaining unit (510) is further configured to:

determine, based on the pass-through distance of each first area, a first pass-through cost component corresponding to the pass-through distance of each first area;

determine, based on the signal quality of the wireless signal in each first area, a second pass-through cost component corresponding to the signal quality of the wireless signal in each first area; and

calculate, based on the first pass-through cost component and the second pass-through cost component of each first area, the pass-through cost for passing through each first area.

**13.** The apparatus (500) according to claim 12, wherein the first obtaining unit (510) is further configured to:

obtain at least one task type, wherein the at least one task type is to be executed when the pass-through path is passed through;

obtain, based on signal quality of at least one type of available wireless signal usable in each of the at least one task type in each first area, a second pass-through cost component corresponding to each task type at each first area; and

calculate, based on the first pass-through cost component of each first area and the second pass-through cost component corresponding to each task type in each first area, a pass-through cost for passing through each first area when each task type is executed; and

the path planning unit is further configured to:

determine, based on the pass-through cost for passing through each first area when each task type is executed, the pass-through path used for executing each task type.

**14.** The apparatus (500) according to claim 13, wherein the at least one task type comprises a first task type, and the first obtaining unit (510) is further configured to:

determine, based on signal quality of at least one type of wireless signal whose signal quality meets a predetermined condition and that is in an available wireless signal usable in the first task type in each first area, a second pass-through cost component corresponding to the first task type in each first area.

**15.** The apparatus (500) according to claim 14, wherein the first obtaining unit (510) is further configured to:

determine, based on signal quality of at least one type of wireless signal whose signal quality is best and that is in the available wireless signal usable in the first task type in each first area, the second pass-through cost component corresponding to the first task type in each first area, wherein the first area is an area that meets the following condition:

the at least one type of wireless signal whose signal quality is best and that is in the available wireless signal usable in the first task type in the first area meets a wireless signal requirement of the first task type.

16. The apparatus (500) according to claim 12, wherein the first obtaining unit (510) is further configured to:

obtain a plurality of task types to be executed when the pass-through path is passed through; obtain, based on signal quality of at least one type of available wireless signal usable in each of the plurality of task types, a second pass-through cost component corresponding to a whole of the plurality of task types in each first area; and

calculate, based on the first pass-through cost component of each first area and the second pass-through cost component corresponding to the whole of the plurality of task types in each first area, a pass-through cost corresponding to the whole of the plurality of task types in each first area; and

the path planning unit is further configured to: determine, based on the pass-through cost corresponding to the whole of the plurality of task types in each first area, the pass-through path used for executing the plurality of task types.

17. The apparatus (500) according to any one of claims 10 to 16, wherein the first obtaining unit (510) is further configured to:

obtain, in a statistical manner based on the pass-through distance of each first area and signal quality that is of wireless signals in each first area and that is obtained at a plurality of times, the pass-through cost for passing through each first area; or

obtain, in real time based on the pass-through distance of each first area and real-time signal quality of a wireless signal in each first area, the pass-through cost for passing through each first area; or

obtain, based on the pass-through distance of each first area and predicted signal quality of a wireless signal in each first area, the pass-through cost for passing through each first area.

**Patentansprüche**

1. Wegplanungsverfahren (200), das Folgendes umfasst:

Erhalten (210), basierend auf einer Durchlaufdistanz jedes einer Vielzahl erster Bereiche und Signalqualität eines drahtlosen Signals in jedem ersten Bereich, von Durchlaufkosten zum Durchlaufen jedes ersten Bereichs; Erhalten (220) eines Startorts und eines Zielorts; und Durchführen (230) einer Wegplanung basierend auf den Durchlaufkosten zum Durchlaufen jedes ersten Bereichs, um einen Durchlaufweg von dem Startort zu dem Zielort zu bestimmen, wobei der Durchlaufweg einen Bereich umfasst, der von dem Startort zu dem Zielort durchlaufen wird; **dadurch gekennzeichnet, dass** die Signalqualität des drahtlosen Signals eine Änderungsrate einer Richtung des drahtlosen Signals und einer Positionierungsgenauigkeit des drahtlosen Signals beinhaltet.

2. Verfahren (200) nach Anspruch 1, wobei das Verfahren ferner Folgendes umfasst:

Generieren (320) einer Signalqualitätsabbildung basierend auf den Durchlaufkosten zum Durchlaufen jedes ersten Bereichs, wobei die Signalqualitätsabbildung die Durchlaufkosten zum Durchlaufen jedes ersten Bereichs umfasst und dazu verwendet wird, die Signalqualität jedes ersten Bereichs zu markieren; und wobei das Durchführen (230) der Wegplanung basierend auf den Durchlaufkosten zum Durchlaufen jedes ersten Bereichs, um einen Durchlaufweg von dem Startort zu dem Zielort zu bestimmen, Folgendes umfasst: Bestimmen (420), basierend auf der Signalqualitätsabbildung, des Durchlaufweges basierend auf den Durchlaufkosten zum Durchlaufen jedes ersten Bereichs.

3. Verfahren (200) nach Anspruch 1 oder 2, wobei das Erhalten (210), basierend auf einer Durchlaufdistanz jedes einer Vielzahl erster Bereiche und Signalqualität eines drahtlosen Signals in jedem ersten Bereich, von Durchlaufkosten zum Durchlaufen jedes ersten Bereichs Folgendes umfasst:

Bestimmen, basierend auf der Durchlaufdistanz jedes ersten Bereichs, einer ersten Durchlaufkostenkomponente, die der Durchlaufdistanz jedes ersten Bereichs entspricht; Bestimmen, basierend auf der Signalqualität des drahtlosen Signals in jedem ersten Bereich, einer zweiten Durchlaufkostenkomponente, die der Signalqualität des drahtlosen Signals in jedem ersten Bereich entspricht; und

Berechnen, basierend auf der ersten Durchlaufkostenkomponente und der zweiten Durchlaufkostenkomponente jedes ersten Bereichs, der Durchlaufkosten zum Durchlaufen jedes ersten Bereichs.

4. Verfahren (200) nach Anspruch 3, wobei das Verfahren ferner Folgendes umfasst:

Erhalten mindestens eines Aufgabentyps, wobei der mindestens eine Aufgabentyp ausgeführt werden soll, wenn der Durchlaufweg durchlaufen wird;

wobei das Bestimmen, basierend auf der Signalqualität des drahtlosen Signals in jedem ersten Bereich, einer zweiten Durchlaufkostenkomponente, die der Signalqualität des drahtlosen Signals in jedem ersten Bereich entspricht, Folgendes umfasst:

Erhalten, basierend auf Signalqualität mindestens eines Typs verfügbaren drahtlosen Signals, das bei jedem des mindestens einen Aufgabentyps in jedem ersten Bereich verwendbar ist, einer zweiten Durchlaufkostenkomponente, die jedem Aufgabentyp in jedem ersten Bereich entspricht;

wobei das Berechnen, basierend auf der ersten Durchlaufkostenkomponente und der zweiten Durchlaufkostenkomponente jedes ersten Bereichs, der Durchlaufkosten zum Durchlaufen jedes ersten Bereichs Folgendes umfasst:

Berechnen, basierend auf der ersten Durchlaufkostenkomponente jedes ersten Bereichs und der zweiten Durchlaufkostenkomponente, die jedem Aufgabentyp in jedem ersten Bereich entsprechen, von Durchlaufkosten zum Durchlaufen jedes ersten Bereichs, wenn jeder Aufgabentyp ausgeführt wird; und

wobei das Durchführen (230) der Wegplanung basierend auf den Durchlaufkosten zum Durchlaufen jedes ersten Bereichs Folgendes umfasst:

Bestimmen, basierend auf den Durchlaufkosten zum Durchlaufen jedes ersten Bereichs, wenn jeder Aufgabentyp ausgeführt wird, eines Durchlaufweges, der zum Ausführen jedes Aufgabentyps verwendet wird.

5. Verfahren (200) nach Anspruch 4, wobei der mindestens eine Aufgabentyp einen ersten Aufgabentyp umfasst, und das Erhalten einer zweiten Durchlaufkostenkomponente, die jedem Aufgabentyp in jedem ersten Bereich entspricht, Folgendes umfasst:
Bestimmen, basierend auf Signalqualität mindestens eines Typs von drahtlosem Signal, dessen Signalqualität eine vorbestimmte Bedingung erfüllt und der in einem verfügbaren drahtlosen Signal ist, das bei dem ersten Aufgabentyp in jedem ersten Bereich verwendbar ist, einer zweiten Durchlaufkostenkomponente, die dem ersten Aufgabentyp in jedem ersten Bereich entspricht.

6. Verfahren (200) nach Anspruch 5, wobei das Bestimmen einer zweiten Durchlaufkostenkomponente, die dem ersten Aufgabentyp in jedem ersten Bereich entspricht, Folgendes umfasst:
Bestimmen, basierend auf Signalqualität mindestens eines Typs von drahtlosem Signal, dessen Signalqualität am besten ist und der in dem verfügbaren drahtlosen Signal ist, das bei dem ersten Aufgabentyp in jedem ersten Bereich verwendbar ist, der zweiten Durchlaufkostenkomponente, die dem ersten Aufgabentyp in jedem ersten Bereich entspricht, wobei der erste Bereich ein Bereich ist, der die folgende Bedingungen erfüllt:
der mindestens eine Typ von drahtlosem Signal, dessen Signalqualität am besten ist und der in dem verfügbaren drahtlosen Signal ist, das bei dem ersten Aufgabentyp in dem ersten Bereich verwendbar ist, erfüllt eine Anforderung für drahtloses Signal des ersten Aufgabentyps.

7. Verfahren (200) nach Anspruch 3, wobei das Verfahren ferner Folgendes umfasst:

Erhalten einer Vielzahl von Aufgabentypen, wobei die Vielzahl von Aufgabentypen ausgeführt werden soll, wenn der Durchlaufweg durchlaufen wird;

wobei das Erhalten, basierend auf der Signalqualität des drahtlosen Signals in jedem ersten Bereich, einer zweiten Durchlaufkostenkomponente, die der Signalqualität des drahtlosen Signals in jedem ersten Bereich entspricht, Folgendes umfasst:

Erhalten, basierend auf Signalqualität mindestens eines Typs von verfügbarem drahtlosen Signal, der bei jedem der Vielzahl von Aufgabentypen verwendet werden kann, einer zweiten Durchlaufkostenkomponente, die einer Gesamtheit der Vielzahl von Aufgabentypen in jedem ersten Bereich entspricht;

wobei das Berechnen, basierend auf der ersten Durchlaufkostenkomponente und der zweiten Durchlaufkostenkomponente jedes ersten Bereichs, der Durchlaufkosten zum Durchlaufen jedes ersten Bereichs Folgendes umfasst:

Berechnen, basierend auf der ersten Durchlaufkostenkomponente jedes ersten Bereichs und der zweiten Durchlaufkostenkomponente, die der Gesamtheit der Vielzahl von Aufgabentypen in jedem ersten Bereich entspricht, von Durchlaufkosten, die der Gesamtheit der Vielzahl von Aufgabentypen in jedem ersten Bereich entsprechen; und

wobei das Durchführen (230) der Wegplanung basierend auf den Durchlaufkosten zum Durchlaufen jedes ersten Bereichs Folgendes umfasst:

Bestimmen, basierend auf den Durchlaufkosten, die der Gesamtheit der Vielzahl von Aufgabentypen in jedem ersten Bereich entsprechen, des Durchlaufweges, der zum Ausführen der Vielzahl von Aufgabentypen verwendet wird.

8. Verfahren (200) nach einem der Ansprüche 3 bis 7, wobei das Bestimmen, basierend auf der Signalqualität des drahtlosen Signals in jedem ersten Bereich, einer zweiten Durchlaufkostenkomponente, die der Signalqualität des drahtlosen Signals in jedem ersten Bereich entspricht, Folgendes umfasst:

Bestimmen, basierend auf Signalqualität eines drahtlosen Signals in jedem Bereich und einer Entsprechung zwischen einem Signalqualitätsintervall eines drahtlosen Signals und einer Durchlaufkostenkomponente, der erhaltenen zweiten Durchlaufkostenkomponente in jedem ersten Bereich.

9. Verfahren (200) nach einem der Ansprüche 1 bis 8, wobei das Erhalten (210), basierend auf einer Durchlaufdistanz jedes einer Vielzahl erster Bereiche und Signalqualität eines drahtlosen Signals in jedem ersten Bereich, von Durchlaufkosten zum Durchlaufen jedes ersten Bereichs Folgendes umfasst:

Erhalten auf statistische Weise basierend auf der Durchlaufdistanz jedes ersten Bereichs und Signalqualität, die von drahtlosen Signalen in jedem ersten Bereich ist, und die zu einer Vielzahl von Zeitpunkten erhalten wird, der Durchlaufkosten zum Durchlaufen jedes ersten Bereichs; oder

Erhalten, in Echtzeit, basierend auf der Durchlaufdistanz jedes ersten Bereichs und Echtzeit-Signalqualität eines drahtlosen Signals in jedem ersten Bereich, der Durchlaufkosten zum Durchlaufen jedes ersten Bereichs; oder

Erhalten, basierend auf der Durchlaufdistanz jedes ersten Bereichs und vorhergesagter Signalqualität eines drahtlosen Signals in jedem ersten Bereich, der Durchlaufkosten zum Durchlaufen jedes ersten Bereichs.

10. Wegplanungsgerät (500), umfassend:

eine erste Erhaltungseinheit (510), die zum Erhalten (210), basierend auf einer Durchlaufdistanz jedes einer Vielzahl erster Bereiche und Signalqualität eines drahtlosen Signals in jedem ersten Bereich, von Durchlaufkosten zum Durchlaufen jedes ersten Bereichs konfiguriert ist;

eine zweite Erhaltungseinheit (520), die dazu konfiguriert ist, einen Startort und einen Zielort zu erhalten (220); und

eine Wegplanungseinheit (530), die dazu konfiguriert ist, Wegplanung basierend auf den Durchlaufkosten zum Durchlaufen jedes ersten Bereichs durchzuführen (230), um einen Durchlaufweg von dem Startort zu dem Zielort zu bestimmen, wobei der Durchlaufweg einen Bereich umfasst, der von dem Startort zu dem Zielort durchlaufen wird;

**dadurch gekennzeichnet, dass**

die Signalqualität des drahtlosen Signals eine Änderungsrate einer Richtung des drahtlosen Signals und einer Positionierungsgenauigkeit des drahtlosen Signals beinhaltet.

11. Gerät (500) nach Anspruch 10, wobei das Gerät ferner eine Abbildungserzeugungseinheit (540) umfasst, die konfiguriert ist zum:

Generieren (320) einer Signalqualitätsabbildung basierend auf den Durchlaufkosten zum Durchlaufen jedes ersten Bereichs, wobei die Signalqualitätsabbildung die Durchlaufkosten zum Durchlaufen jedes ersten Bereichs umfasst und dazu verwendet wird, die Signalqualität jedes ersten Bereichs zu markieren; und

die Wegplanungseinheit (530) ferner konfiguriert ist zum:

Bestimmen (420), basierend auf der Signalqualitätsabbildung, des Durchlaufweges basierend auf den Durchlaufkosten zum Durchlaufen jedes ersten Bereichs.

12. Gerät (500) nach Anspruch 10 oder 11, wobei die erste Erhaltungseinheit (510) ferner konfiguriert ist zum:

Bestimmen, basierend auf der Durchlaufdistanz jedes ersten Bereichs, einer ersten Durchlaufkostenkomponente, die der Durchlaufdistanz jedes ersten Bereichs entspricht;

Bestimmen, basierend auf der Signalqualität des drahtlosen Signals in jedem ersten Bereich, einer zweiten Durchlaufkostenkomponente, die der Signalqualität des drahtlosen Signals in jedem ersten Bereich entspricht; und

Berechnen, basierend auf der ersten Durchlaufkostenkomponente und der zweiten Durchlaufkostenkomponente jedes ersten Bereichs, der Durchlaufkosten zum Durchlaufen jedes ersten Bereichs.

13. Gerät (500) nach Anspruch 12, wobei die erste Erhaltungseinheit (510) ferner konfiguriert ist zum:

Erhalten mindestens eines Aufgabentyps, wobei der mindestens eine Aufgabentyp ausgeführt werden soll, wenn der Durchlaufweg durchlaufen wird;

Erhalten, basierend auf Signalqualität mindestens eines Typs verfügbaren drahtlosen Signals, der bei jedem des mindestens einen Aufgabentyps in jedem ersten Bereich verwendbar ist, einer zweiten Durchlaufkostenkomponente, die jedem Aufgabentyp in jedem ersten Bereich entspricht; und

Berechnen, basierend auf der ersten Durchlaufkostenkomponente jedes ersten Bereichs und der zweiten Durchlaufkostenkomponente, die jedem Aufgabentyp in jedem ersten Bereich entsprechen, von Durchlaufkosten zum Durchlaufen jedes ersten Bereichs, wenn jeder Aufgabentyp ausgeführt wird; und

die Wegplanungseinheit ferner konfiguriert ist zum:

Bestimmen, basierend auf den Durchlaufkosten zum Durchlaufen jedes ersten Bereichs, wenn jeder Aufgabentyp ausgeführt wird, des Durchlaufweges, der zum Ausführen jedes Aufgabentyps verwendet wird.

14. Gerät (500) nach Anspruch 13, wobei der mindestens eine Aufgabentyp einen ersten Aufgabentyp umfasst, und die erste Erhaltungseinheit (510) ferner konfiguriert ist zum:

Bestimmen, basierend auf Signalqualität mindestens eines Typs von drahtlosem Signal, dessen Signalqualität eine vorbestimmte Bedingung erfüllt und der in einem verfügbaren drahtlosen Signal ist, das bei dem ersten Aufgabentyp in jedem ersten Bereich verwendbar ist, einer zweiten Durchlaufkostenkomponente, die dem ersten Aufgabentyp in jedem ersten Bereich entspricht.

15. Gerät (500) nach Anspruch 14, wobei die erste Erhaltungseinheit (510) ferner konfiguriert ist zum:

Bestimmen, basierend auf Signalqualität mindestens eines Typs von drahtlosem Signal, dessen Signalqualität am besten ist und der in dem verfügbaren drahtlosen Signal ist, das bei dem ersten Aufgabentyp in jedem ersten Bereich verwendbar ist, der zweiten Durchlaufkostenkomponente, die dem ersten Aufgabentyp in jedem ersten Bereich entspricht, wobei der erste Bereich ein Bereich ist, der die folgende Bedingung erfüllt:

der mindestens eine Typ von drahtlosem Signal, dessen Signalqualität am besten ist und der in dem verfügbaren drahtlosen Signal ist, das bei dem ersten Aufgabentyp in dem ersten Bereich verwendbar ist, erfüllt eine Anforderung für drahtloses Signal des ersten Aufgabentyps.

16. Gerät (500) nach Anspruch 12, wobei die erste Erhaltungseinheit (510) ferner konfiguriert ist zum:

Erhalten einer Vielzahl von Aufgabentypen, die auszuführen ist, wenn der Durchlaufweg durchlaufen wird;

Erhalten, basierend auf Signalqualität mindestens eines Typs von verfügbarem drahtlosen Signal, der bei jedem der Vielzahl von Aufgabentypen verwendet werden kann, einer zweiten Durchlaufkostenkomponente, die einer Gesamtheit der Vielzahl von Aufgabentypen in jedem ersten Bereich entspricht; und

Berechnen, basierend auf der ersten Durchlaufkostenkomponente jedes ersten Bereichs und der zweiten Durchlaufkostenkomponente, die der Gesamtheit der Vielzahl von Aufgabentypen in jedem ersten Bereich entspricht, von Durchlaufkosten, die der Gesamtheit der Vielzahl von Aufgabentypen in jedem ersten Bereich entsprechen; und

die Wegplanungseinheit ferner konfiguriert ist zum:

Bestimmen, basierend auf den Durchlaufkosten, die der Gesamtheit der Vielzahl von Aufgabentypen in jedem ersten Bereich entsprechen, des Durchlaufweges, der zum Ausführen der Vielzahl von Aufgabentypen verwendet wird.

17. Gerät (500) nach einem der Ansprüche 10 bis 16, wobei die erste Erhaltungseinheit (510) ferner konfiguriert ist zum:

Erhalten auf statistische Weise basierend auf der Durchlaufdistanz jedes ersten Bereichs und Signalqualität, die von drahtlosen Signalen in jedem ersten Bereich ist, und die zu einer Vielzahl von Zeitpunkten erhalten wird, der Durchlaufkosten zum Durchlaufen jedes ersten Bereichs; oder

Erhalten, in Echtzeit, basierend auf der Durchlaufdistanz jedes ersten Bereichs und Echtzeit-Signalqualität eines drahtlosen Signals in jedem ersten Bereich, der Durchlaufkosten zum Durchlaufen jedes ersten Bereichs; oder

Erhalten, basierend auf der Durchlaufdistanz jedes ersten Bereichs und vorhergesagter Signalqualität eines drahtlosen Signals in jedem ersten Bereich, der Durchlaufkosten zum Durchlaufen jedes ersten Bereichs.

**Revendications**

1. Procédé de planification de trajectoire (200), comprenant :

l'obtention (210), sur la base d'une distance de transmission de chacune d'une pluralité de premières zones et de la qualité de signal d'un signal sans fil dans chaque première zone, d'un coût de transmission pour traverser chaque première zone ;

l'obtention (220) d'un emplacement de départ et d'un emplacement cible ; et

la réalisation (230) d'une planification de trajectoire sur la base du coût de transmission pour traverser chaque première zone, afin de déterminer une trajectoire de transmission de l'emplacement de départ à l'emplacement cible, dans lequel la trajectoire de transmission comprend une zone traversée de l'emplacement de départ à l'emplacement cible ;

**caractérisé en ce que**

la qualité de signal du signal sans fil comporte un taux de changement d'une direction du signal sans fil et une précision de positionnement du signal sans fil.

2. Procédé (200) selon la revendication 1, dans lequel le procédé comprend en outre :

la génération (320) d'une carte de qualité de signal basée sur le coût de transmission pour traverser chaque première zone, dans lequel la carte de qualité de signal comprend le coût de transmission pour traverser chaque première zone, et est utilisée pour marquer la qualité de signal de chaque première zone ; et

la réalisation (230) d'une planification de trajectoire basée sur le coût de transmission pour traverser chaque première zone, afin de déterminer une trajectoire de transmission de l'emplacement de départ à l'emplacement cible comprend :

sur la base de la carte de qualité de signal, la détermination (420) de la trajectoire de transmission sur la base du coût de transmission pour traverser chaque première zone.

3. Procédé (200) selon la revendication 1 ou 2, dans lequel l'obtention (210), sur la base d'une distance de transmission de chacune d'une pluralité de premières zones et de la qualité de signal d'un signal sans fil dans chaque première zone, d'un coût de transmission pour traverser chaque première zone comprend :

la détermination, sur la base de la distance de transmission de chaque première zone, d'une première composante de coût de transmission correspondant à la distance de transmission de chaque première zone ;

la détermination, sur la base de la qualité de signal du signal sans fil dans chaque première zone, d'une seconde composante de coût de transmission correspondant à la qualité de signal du signal sans fil dans chaque première zone ; et

le calcul, sur la base de la première composante de coût de transmission et de la seconde composante de coût de transmission de chaque première zone, du coût de transmission pour traverser chaque première zone.

4. Procédé (200) selon la revendication 3, dans lequel le procédé comprend en outre :

l'obtention d'au moins un type de tâche, dans lequel l'au moins un type de tâche doit être exécuté lorsque la trajectoire de transmission est traversée ;

la détermination, sur la base de la qualité de signal du signal sans fil dans chaque première zone, d'une seconde composante de coût de transmission correspondant à la qualité de signal du signal sans fil dans chaque première zone comprend :

l'obtention, sur la base de la qualité de signal d'au moins un type de signal sans fil disponible utilisable dans chacun de l'au moins un type de tâche dans chaque première zone, d'une seconde composante de coût de transmission correspondant à chaque type de tâche dans chaque première zone ;

le calcul, sur la base de la première composante de coût de transmission et de la seconde composante de coût de transmission de chaque première zone, du coût de transmission pour traverser chaque première zone comprend :

le calcul, sur la base de la première composante de coût de transmission de chaque première zone et de la seconde composante de coût de transmission correspondant à chaque type de tâche dans chaque première zone, d'un coût de transmission pour traverser chaque première zone lorsque chaque type de tâche est exécuté ; et

la réalisation (230) d'une planification de trajectoire basée sur le coût de transmission pour traverser chaque première zone comprend :

la détermination, sur la base du coût de transmission pour traverser chaque première zone lorsque chaque type de tâche est exécuté, d'une trajectoire de transmission utilisée pour exécuter chaque type de tâche.

5. Procédé (200) selon la revendication 4, dans lequel l'au moins un type de tâche comprend un premier type de tâche, et l'obtention d'une seconde composante de coût de transmission correspondant à chaque type de tâche dans chaque première zone comprend :

la détermination, sur la base de la qualité de signal d'au moins un type de signal sans fil dont la qualité de signal remplit une condition prédéterminée et qui se trouve dans un signal sans fil disponible utilisable dans le premier type de tâche dans chaque première zone, d'une seconde composante de coût de transmission correspondant au premier type de tâche dans chaque première zone.

6. Procédé (200) selon la revendication 5, dans lequel la détermination d'une seconde composante de coût de transmission correspondant au premier type de tâche dans chaque première zone comprend :
la détermination, sur la base de la qualité de signal d'au moins un type de signal sans fil dont la qualité de signal est meilleure et qui se trouve dans le signal sans fil disponible utilisable dans le premier type de tâche dans chaque première zone, de la seconde composante de coût de transmission correspondant au premier type de tâche dans chaque première zone, dans lequel la première zone est une zone qui remplit la condition suivante :
l'au moins un type de signal sans fil dont la qualité de signal est la meilleure et qui est dans le signal sans fil disponible utilisable dans le premier type de tâche dans la première zone répond à une exigence de signal sans fil du premier type de tâche.

7. Procédé (200) selon la revendication 3, dans lequel le procédé comprend en outre :

l'obtention d'une pluralité de types de tâches, dans lequel la pluralité de types de tâches doit être exécutée lorsque la trajectoire de transmission est traversée ;
l'obtention, sur la base de la qualité de signal du signal sans fil dans chaque première zone, d'une seconde composante de coût de transmission correspondant à la qualité de signal du signal sans fil dans chaque première zone comprend :
l'obtention, sur la base de la qualité de signal d'au moins un type de signal sans fil disponible utilisable dans chacun de la pluralité de types de tâches, d'une seconde composante de coût de transmission correspondant à l'ensemble de la pluralité de types de tâches dans chaque première zone ;
le calcul, sur la base de la première composante de coût de transmission et de la seconde composante de coût de transmission de chaque première zone, du coût de transmission pour traverser chaque première zone comprend :
le calcul, sur la base de la première composante de coût de transmission de chaque première zone et de la seconde composante de coût de transmission correspondant à l'ensemble de la pluralité de types de tâches dans chaque première zone, d'un coût de transmission correspondant à l'ensemble de la pluralité de types de tâches dans chaque première zone ; et
la réalisation (230) d'une planification de trajectoire basée sur le coût de transmission pour traverser chaque première zone comprend :
la détermination, sur la base du coût de transmission correspondant à l'ensemble de la pluralité de types de tâches dans chaque première zone, de la trajectoire de transmission utilisée pour exécuter la pluralité de types de tâches.

8. Procédé (200) selon l'une quelconque des revendications 3 à 7, dans lequel la détermination, sur la base de la qualité de signal du signal sans fil dans chaque première zone, d'une seconde composante de coût de transmission correspondant à la qualité de signal du signal sans fil dans chaque première zone comprend :
la détermination, sur la base de la qualité de signal d'un signal sans fil dans chaque zone et d'une correspondance entre un intervalle de qualité de signal d'un signal sans fil et une composante de coût de transmission, de la seconde composante de coût de transmission obtenue dans chaque première zone.

9. Procédé (200) selon l'une quelconque des revendications 1 à 8, dans lequel l'obtention (210), sur la base d'une distance de transmission de chacune d'une pluralité de premières zones et de la qualité de signal d'un signal sans fil dans chaque première zone, d'un coût de transmission pour traverser chaque première zone comprend :

l'obtention, de manière statistique sur la base de la distance de transmission de chaque première zone et de la qualité de signal qui correspond à des signaux sans fil dans chaque première zone et qui est obtenue à plusieurs moments, du coût de transmission pour traverser chaque première zone ; ou
l'obtention, en temps réel sur la base de la distance de transmission de chaque première zone et de la qualité de signal en temps réel d'un signal sans fil dans chaque première zone, du coût de transmission pour traverser chaque première zone ; ou
l'obtention, sur la base de la distance de transmission de chaque première zone et de la qualité de signal prédite d'un signal sans fil dans chaque première zone, du coût de transmission pour traverser chaque première zone.

10. Appareil de planification de trajectoire (500), comprenant :

une première unité d'obtention (510), configurée pour obtenir (210), sur la base d'une distance de transmission de chacune d'une pluralité de premières zones et de la qualité de signal d'un signal sans fil dans chaque première zone, un coût de transmission pour traverser chaque première zone ;

une seconde unité d'obtention (520), configurée pour obtenir (220) un emplacement de départ et un emplacement cible ; et une unité de planification de trajectoire (530), configurée pour réaliser (230) une planification de trajectoire sur la base du coût de transmission pour traverser chaque première zone, afin de déterminer une trajectoire de transmission de l'emplacement de départ à l'emplacement cible, dans lequel la trajectoire de transmission comprend une zone traversée de l'emplacement de départ à l'emplacement cible ;

**caractérisé en ce que**

la qualité de signal du signal sans fil comporte un taux de changement d'une direction du signal sans fil et une précision de positionnement du signal sans fil.

11. Appareil (500) selon la revendication 10, dans lequel l'appareil comprend en outre une unité de génération de carte (540), configurée pour :

générer (320) une carte de qualité de signal basée sur le coût de transmission pour traverser chaque première zone, dans lequel la carte de qualité de signal comprend le coût de transmission pour traverser chaque première zone, et est utilisée pour marquer la qualité de signal de chaque première zone ; et

l'unité de planification de trajectoire (530) est en outre configurée pour :

sur la base de la carte de qualité de signal, déterminer (420) la trajectoire de transmission sur la base du coût de transmission pour traverser chaque première zone.

12. Appareil (500) selon la revendication 10 ou 11, dans lequel la première unité d'obtention (510) est en outre configurée pour :

déterminer, sur la base de la distance de transmission de chaque première zone, une première composante de coût de transmission correspondant à la distance de transmission de chaque première zone ;

déterminer, sur la base de la qualité de signal du signal sans fil dans chaque première zone, une seconde composante de coût de transmission correspondant à la qualité de signal du signal sans fil dans chaque première zone ; et

calculer, sur la base de la première composante de coût de transmission et de la seconde composante de coût de transmission de chaque première zone, le coût de transmission pour traverser chaque première zone.

13. Appareil (500) selon la revendication 12, dans lequel la première unité d'obtention (510) est en outre configurée pour :

obtenir au moins un type de tâche, dans lequel l'au moins un type de tâche doit être exécuté lorsque la trajectoire de transmission est traversée ;

obtenir, sur la base de la qualité de signal d'au moins un type de signal sans fil disponible utilisable dans chacun de l'au moins un type de tâche dans chaque première zone, une seconde composante de coût de transmission correspondant à chaque type de tâche dans chaque première zone ; et

calculer, sur la base de la première composante de coût de transmission de chaque première zone et de la seconde composante de coût de transmission correspondant à chaque type de tâche dans chaque première zone, un coût de transmission pour traverser chaque première zone lorsque chaque type de tâche est exécuté ; et

l'unité de planification de trajectoire est en outre configurée pour :

déterminer, sur la base du coût de transmission pour traverser chaque première zone lorsque chaque type de tâche est exécuté, la trajectoire de transmission utilisée pour exécuter chaque type de tâche.

14. Appareil (500) selon la revendication 13, dans lequel l'au moins un type de tâche comprend un premier type de tâche, et la première unité d'obtention (510) est en outre configurée pour :

déterminer, sur la base de la qualité de signal d'au moins un type de signal sans fil dont la qualité de signal remplit une condition prédéterminée et qui se trouve dans un signal sans fil disponible utilisable dans le premier type de tâche dans chaque première zone, une seconde composante de coût de transmission correspondant au premier type de tâche dans chaque première zone.

15. Appareil (500) selon la revendication 14, dans lequel la première unité d'obtention (510) est en outre configurée pour :

déterminer, sur la base de la qualité de signal d'au moins un type de signal sans fil dont la qualité de signal est meilleure et qui se trouve dans un signal sans fil disponible utilisable dans le premier type de tâche dans chaque première zone, la seconde composante de coût de transmission correspondant au premier type de tâche dans chaque première zone, dans lequel la première zone est une zone qui remplit la condition suivante :

l'au moins un type de signal sans fil dont la qualité de signal est la meilleure et qui est dans le signal sans fil disponible utilisable dans le premier type de tâche dans la première zone répond à une exigence de signal sans fil du premier type de tâche.

16. Appareil (500) selon la revendication 12, dans lequel la première unité d'obtention (510) est en outre configurée pour :

obtenir une pluralité de types de tâches à exécuter lorsque la trajectoire de transmission est traversée ;

obtenir, sur la base de la qualité de signal d'au moins un type de signal sans fil disponible utilisable dans chacun de la pluralité de types de tâches, une seconde composante de coût de transmission correspondant à l'ensemble de la pluralité de types de tâches dans chaque première zone ; et

calculer, sur la base de la première composante de coût de transmission de chaque première zone et de la seconde composante de coût de transmission correspondant à l'ensemble de la pluralité de types de tâches dans chaque première zone, un coût de transmission correspondant à l'ensemble de la pluralité des types de tâches dans chaque première zone ; et

l'unité de planification de trajectoire est en outre configurée pour :

déterminer, sur la base du coût de transmission correspondant à l'ensemble de la pluralité de types de tâches dans chaque première zone, la trajectoire de transmission utilisée pour exécuter la pluralité de types de tâches.

17. Appareil (500) selon l'une quelconque des revendications 10 à 16, dans lequel la première unité d'obtention (510) est en outre configurée pour :

obtenir, de manière statistique sur la base de la distance de transmission de chaque première zone et de la qualité de signal qui correspond à des signaux sans fil dans chaque première zone et qui est obtenue à plusieurs moments, le coût de transmission pour traverser chaque première zone ; ou

obtenir, en temps réel sur la base de la distance de transmission de chaque première zone et de la qualité de signal en temps réel d'un signal sans fil dans chaque première zone, le coût de transmission pour traverser chaque première zone ; ou

obtenir, sur la base de la distance de transmission de chaque première zone et de la qualité de signal prédite d'un signal sans fil dans chaque première zone, le coût de transmission pour traverser chaque première zone.

FIG. 1

200

| Obtain, based on a pass-through distance of each of a plurality of first areas and signal quality of a wireless signal in each first area, a pass-through cost for passing through each first area | 210 |

| Obtain a start location and a target location | 220 |

| Perform path planning based on the pass-through cost for passing through each first area, to determine a pass-through path from the start location to the target location, where the pass-through path includes an area passed through from the start location to the target location | 230 |

FIG. 2

FIG. 3

FIG. 4

| | | | | | | |
|---|---|---|---|---|---|---|
| | | | | | | |

<table>
<tr><td>74<br><br>14    60</td><td>60<br><br>20    50</td><td>54<br><br>14    40</td><td>O</td><td></td><td></td><td></td></tr>
<tr><td>60<br><br>10    50</td><td>A</td><td>40   C<br><br>10    30</td><td>O</td><td></td><td>B</td><td></td></tr>
<tr><td>74<br><br>14    60</td><td>60<br><br>10    50</td><td>54   D<br><br>14    40</td><td>O</td><td></td><td></td><td></td></tr>
<tr><td></td><td>88<br><br>28    60</td><td>74<br><br>24    50</td><td></td><td></td><td></td><td></td></tr>
</table>

FIG. 5

FIG. 6

| 108   28 80 | 94   24 70 | 80   20 60 | 74   24 50 | | | | |
|---|---|---|---|---|---|---|---|
| 94   24 70 | 74   14 60 | 60   10 50 | <u>240</u>   <u>110</u> <u>130</u> | O | | | |
| 80   20 60 | 60   10 50 | A | <u>220</u>   <u>100</u> <u>120</u> | O | 100   28 28 | 68 B   68 00 | 100   28 28 |
| 94   24 70 | 74   14 60 | 60 ●   10 50 | <u>240</u>   <u>110</u> <u>130</u> | O | 74   54 20 | 68 ●   58 10 | 88   68 20 |
| 108   28 80 | 94   24 70 | 80   20 60 | 74 ●   24 50 | 74 ●   34 40 | 74 ●   44 30 | 74   54 20 | 102   72 30 |
| | | 108   38 70 | 94   34 60 | 88   38 50 | 88   48 40 | 88   58 30 | |

FIG. 7

<u>300</u>

| Obtain, based on a pass-through distance of each of a plurality of first areas and signal quality of a wireless signal in each first area, a pass-through cost for passing through each first area | 310 |
|---|---|
| Generate a signal quality map based on the pass-through cost for passing through each first area, where the signal quality map includes the pass-through cost for passing through each first area, and is used to mark the signal quality of each first area within a coverage area of the plurality of first areas | 320 |

FIG. 8

<u>400</u>

Obtain a signal quality map, where the signal quality map includes a pass-through cost for passing through each of a plurality of first areas, and is used to mark signal quality of each first area within a coverage area of the plurality of first areas, and the pass-through cost of each first area is determined based on a pass-through distance of each first area and signal quality of a wireless signal in each first area

410

Perform path planning by using the signal quality map

420

FIG. 9

Path planning apparatus 500

First obtaining unit

510

Second obtaining unit

520

Map generation unit

540

Path planning unit

530

FIG. 10

Map generation device 600

Obtaining unit — 610

Map generation unit — 620

FIG. 11

Path planning apparatus 700

Obtaining unit — 710

Path planning unit — 720

FIG. 12

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150197010 A1
- US 20120059578 A1